# EUROPEAN PATENT SPECIFICATION

(11) **EP 4 351 102 B1**
(45) Date of publication and mention of the grant of the patent: **25.03.2026**
(21) Application number: 22855155.2
(22) Date of filing: 13.07.2022
(51) Int. Cl.: H04L 65/403, H04L 65/4038, H04L 65/10, H04L 65/1023, H04L 12/18, H04M 3/56, H04N 7/15, H04L 65/1046, H04L 65/1069, H04L 65/1063, H04L 65/1016

(54) **CALL PROCESSING METHOD, APPARATUS AND SYSTEM**
ANRUFVERARBEITUNGSVERFAHREN, -VORRICHTUNG UND -SYSTEM
PROCÉDÉ, APPAREIL ET SYSTÈME DE TRAITEMENT D'APPEL

(30) Priority: 13.08.2021 CN 202110929156
(43) Date of publication of application: 10.04.2024
(73) Proprietor: Huawei Technologies Co., Ltd., Shenzhen, Guangdong 518129 (CN)
(72) Inventor: LIN, Hongda, Shenzhen, Guangdong 518129 (CN); HUANG, Kai, Shenzhen, Guangdong 518129 (CN); LI, Tuo, Shenzhen, Guangdong 518129 (CN); OU, Wenjun, Shenzhen, Guangdong 518129 (CN)
(74) Representative: Goddar, Heinz J.
(86) International application number: PCT/CN2022/105366
(87) International publication number: WO 2023/016172

(56) References cited:
- WO-A1-2011/015019
- CN-A- 101 998 568
- CN-A- 102 348 291
- CN-A- 102 696 213
- CN-A- 106 161 357
- CN-A- 108 616 496
- US-A1- 2018 084 100
- US-B1- 9 712 570
- ZTE: "MRFC functionality for IMS Advanced Conferences", 3GPP DRAFT; C1-104802, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Jacksonville; 20101115, 8 November 2010 (2010-11-08), XP050465949

## Description

### TECHNICAL FIELD

This application relates to the field of communication technologies, and in particular, to a call processing method and apparatus, and a system.

### BACKGROUND

An IP multimedia subsystem (IP multimedia subsystem, IMS) is a universal network architecture for providing multimedia services over IP networks. In an IMS network, a session initiation protocol (session initiation protocol, SIP) is used as a main signaling protocol, so that operators can provide end-to-end all-IP multimedia services for users. The IMS network supports various services and a plurality of access manners, to provide consistent and convergent service experience for users using different access manners. For example, an IMS-based multiparty call may provide a multi-connection call capability for a user, in other words, three or more users (participants) can simultaneously participate in a same session. This facilitates communication between a plurality of users and reduces costs of information communication and transferring between the plurality of users.

Currently, when multiparty communication is implemented in a networking manner of a live network, in an IMS half-call model, regardless of whether a calling side and each participant access the IMS network through a same physical IMS access media gateway (IMS access media gateway, IMS-AGW), each participant needs an independent IMS-AGW logically, and a real-time transport protocol (real-time transport protocol, RTP) media needs to be forwarded once by each of an IMS-AGW on the calling side, a multimedia resource function processor (multimedia resource function processor, MRFP) on a center side, and an IMS-AGW on a called side, resulting in multi-hop media forwarding and waste of resources. In addition, multiparty communication using a multipoint control unit (multipoint control unit, MCU) architecture requires the MRFP on the center side to provide an audio mixing function, which consumes a large amount of resources. In addition, the MRFP on the center side can provide only a multiparty voice call, but cannot support a multiparty video call and a future multiparty media service.

US 9,712,570 B 1 discloses a method for dynamically adapting to increased system load at a selective forwarding unit (SFU). In an embodiment, an SFU sends a plurality of video streams to a plurality of participant computing devices. The SFU monitors a system load value on the SFU according to any of a plurality of metrics. When the SFU determines that the monitored system load value exceeds a stored load threshold value, the SFU selects one or more of the streams being sent to participant computing devices and disables them.

The Change Request C1-104802, "MRFC functionality for IMS Advanced Conferences", 3GPP TSG-CT WG1 Meeting #68, November 2010, provides MRFC functionality for IMS Advanced Conferences and provides a brief discussion of interfaces between AS and MRFC for the conference service.

### SUMMARY

Embodiments of this application provide a call processing method and apparatus, and a system. In the method, a unified media function network element newly introduced in an IMS network replaces an original multiparty conference media function network element, and a multiparty call media service is provided on an access side, to reduce media roundabout, reduce a delay, and support a requirement of a delay-sensitive service such as XR on an IMS architecture.

According to a first aspect, an embodiment of this application provides a call processing method performed by a unified media function, UMF, network element in an IP multimedia subsystem, IMS-based network architecture. The unified media function network element receives a multiparty call connection request message from an application server, where the multiparty call connection request message includes identifiers or an identifier list of terminal devices that request to participate in a multiparty call. The unified media function network element receives respective media data from the terminal devices participating in the multiparty call, and forwards media data of any one of the terminal devices participating in the multiparty call to one or more terminal devices other than the terminal device in the terminal devices participating in the multiparty call. The terminal devices participating in the multiparty call include at least three terminal devices. By using the method, the unified media function network element replaces an original multimedia resource processing function in an IMS network, and can provide a multiparty call media service on an access side, to reduce media roundabout and a service delay. In addition, the unified media function network element directly forwards audio-video streams of a multiparty call, and does not perform audio mixing processing on the audio-video streams, which helps reduce performance consumption of the unified media function network element.

In a possible design, the unified media function network element creates, based on the multiparty call connection request message, respective media endpoints for the terminal devices participating in the multiparty call. The unified media function network element receives association indication information from the application server, and associates, based on the association indication information, a media endpoint of any one of the terminal devices participating in the multiparty call with respective media endpoints of one or more terminal devices other than the any terminal device in the terminal devices participating in the multiparty call. By using the method, the unified media function network element associates, based on an indication of the application server, the respective media endpoints of the terminal devices participating in the multiparty call, to directly forward the audio-video streams of the multiparty call. This helps reduce the performance consumption of the unified media function network element.

In a possible design, the unified media function network element creates a session media processing context based on the multiparty call connection request message, where the session media processing context includes the respective media endpoints of the terminal devices participating in the multiparty call.

In a possible design, the unified media function network element creates, based on the multiparty call connection request message, respective media streams for the terminal devices participating in the multiparty call. The session media processing context further includes the respective media streams for the terminal devices participating in the multiparty call.

In a possible design, the unified media function network element performs multi-stream forwarding through an association between the media endpoint of the any one of the terminal devices participating in the multiparty call and the respective media endpoints of the one or more terminal devices other than the any terminal device in the terminal devices participating in the multiparty call. By using the method, only one unified media function network element is required for media processing logic, which reduces a quantity of media forwarding hops in a multiparty call process and saves media resources.

In a possible design, the unified media function network element sends respective resource identifiers of the terminal devices participating in the multiparty call to the application server. By using the method, the unified media function network element can send a uniform media resource identifier URL to a control network element in an IMS trusted domain, to implement UMF media resource sharing.

In a possible design, the unified media function network element creates, based on the multiparty call connection request message, a selective forwarding unit for the terminal devices participating in the multiparty call, where the selective forwarding unit is configured to perform multi-stream forwarding. By using the method, the unified media function network element may further create a selective forwarding unit SFU for the multiparty call. For example, the SFU is configured to receive an audio-video stream from any terminal device participating in the multiparty call, and directly forward the audio-video stream to another terminal device participating in the multiparty call, which helps reduce the performance consumption of the unified media function network element.

In a possible design, the unified media function network element associates the selective forwarding unit with the respective media endpoints of the terminal devices participating in the multiparty call, and performs multi-stream forwarding through an association between the media endpoint of the any one of the terminal devices participating in the multiparty call and the selective forwarding unit and an association between the selective forwarding unit and the respective media endpoints of the one or more terminal devices other than the any terminal device in the terminal devices participating in the multiparty call. By using the method, only one unified media function network element is required for media processing logic, which reduces a quantity of media forwarding hops in a multiparty call process and saves media resources.

According to a second aspect, an embodiment of this application provides another call processing method performed by an application server, AS, in an IP multimedia subsystem, IMS-based network architecture. The application server receives a first session request message, where the first session request message indicates the application server to create a multiparty call. The application server sends a multiparty call connection request message to a unified media function network element, where the multiparty call connection request message includes identifiers or an identifier list of terminal devices participating in the multiparty call, and the multiparty call connection request message is used for requesting the unified media function network element to forward media data of any one of the terminal devices participating in the multiparty call to one or more terminal devices other than the any terminal device in the terminal devices participating in the multiparty call. By using the method, the application server may indicate the unified media function network element to perform multi-stream forwarding on audio-video streams between the terminal devices participating in the multiparty call, and the unified media function network element replaces a function of an MRFP in an IMS network.

In a possible design, the application server sends association indication information to the unified media function network element, where the association indication information indicates the unified media function network element to associate a media endpoint of any one of the terminal devices participating in the multiparty call with respective media endpoints of one or more terminal devices other than the any terminal device in the terminal devices participating in the multiparty call.

In a possible design, the multiparty call connection request message further indicates the unified media function network element to create a selective forwarding unit for the terminal devices participating in the multiparty call, and the selective forwarding unit is associated with respective media endpoints of the terminal devices participating in the multiparty call. An association relationship between the selective forwarding unit and the respective media endpoints of the terminal devices participating in the multiparty call is used for multi-stream forwarding.

In a possible design, the application server receives resource identifiers of the terminal devices participating in the multiparty call from the unified media function network element.

In a possible design, the first session request message is an INVITE message in a session initiation protocol SIP, and the INVITE message includes an identifier of any terminal device that requests to participate in the multiparty call and multiparty call creation indication information. Optionally, the INVITE message further includes the identifier list of the terminal devices that request to participate in the multiparty call.

In a possible design, the application server receives a second session request message, where the second session request message indicates the application server to add one or more terminal devices other than the any terminal device in the terminal devices participating in the multiparty call to the multiparty call, and the second session request message is a REFER message in the session initiation protocol SIP.

According to a third aspect, an embodiment of this application provides a call processing apparatus, where the call processing apparatus includes a communication module. The communication module is configured to receive a multiparty call connection request message from an application server, where the multiparty call connection request message includes identifiers or an identifier list of terminal devices that request to participate in a multiparty call. The communication module is further configured to receive respective media data from the terminal devices participating in the multiparty call, where the terminal devices participating in the multiparty call include at least three terminal devices. The communication module is further configured to forward media data of any one of the terminal devices participating in the multiparty call to one or more terminal devices other than the any terminal device in the terminal devices participating in the multiparty call.

In a possible design, the call processing apparatus further includes a processing module. The processing module is configured to create, based on the multiparty call connection request message, respective media endpoints for the terminal devices participating in the multiparty call. The processing module is further configured to associate, based on the multiparty call connection request message, a media endpoint of any one of the terminal devices participating in the multiparty call with respective media endpoints of one or more terminal devices other than the any terminal device in the terminal devices participating in the multiparty call.

For other functions implemented by the communication module and the processing module, refer to the first aspect. Details are not described herein again.

According to a fourth aspect, an embodiment of this application provides another call processing apparatus, where the call processing apparatus includes a communication module. The communication module is configured to receive a first session request message, where the first session request message indicates an application server to create a multiparty call. The communication module is further configured to send a multiparty call connection request message to a unified media function network element, where the multiparty call connection request message includes identifiers or an identifier list of terminal devices participating in the multiparty call, and the multiparty call connection request message is used for requesting the unified media function network element to forward media data of any one of the terminal devices participating in the multiparty call to one or more terminal devices other than the any terminal device in the terminal devices participating in the multiparty call.

For other functions implemented by the communication module, refer to the second aspect. Details are not described herein again.

According to a fifth aspect, an embodiment of this application provides a computer-readable storage medium. The readable storage medium includes a program or instructions. When the program or the instructions are run on a computer, the computer is enabled to perform the methods according to the first aspect to the fourth aspect and any possible implementation of the first aspect to the fourth aspect.

According to a sixth aspect, an embodiment further provides a communication system. The system includes the unified media function network element, the application server, the first access media control network element, and the second access media control network element.

In a possible implementation, the session media processing context in the foregoing aspects is referred to as a Context, the media endpoint in the foregoing aspects is referred to as an Endpoint, and the media stream in the foregoing aspects is referred to as a Stream.

In a possible implementation, the media endpoint in the foregoing aspect may also be referred to as a Connector.

### BRIEF DESCRIPTION OF DRAWINGS

FIG. 1 is a schematic diagram of an IMS network architecture;
FIG. 2 is a schematic diagram of a network architecture according to an embodiment of this application;
FIG. 3a is a schematic diagram of a Mesh architecture used in multiparty communication;
FIG. 3b is a schematic diagram of an MCU architecture used in multiparty communication;
FIG. 3c is a schematic diagram of an SFU architecture used in multiparty communication;
FIG. 4 is a schematic flowchart of IMS basic call and media negotiation;
FIG. 5A and FIG. 5B are a schematic diagram of a multiparty call process based on an MCU architecture in an IMS network;
FIG. 6 is a schematic diagram of a media connection topology after a multiparty call process based on an MCU architecture in an IMS network is completed;
FIG. 7 is a schematic diagram of a media resource model defined in an H.248 protocol;
FIG. 8 is a schematic flowchart of a call processing method according to an embodiment of this application;
FIG. 9 is a session media processing context that is created by a UMF and that is for a multiparty call according to an embodiment of this application;
FIG. 10 is another session media processing context that is created by a UMF and that is for a multiparty call according to an embodiment of this application;
FIG. 11A to FIG. 11D are a schematic flowchart of another call processing method according to an embodiment of this application;
FIG. 12A and FIG. 12B are a schematic flowchart of a call processing method applied to a multiparty call establishment scenario according to an embodiment of this application;
FIG. 13 is a schematic diagram of a call processing apparatus according to an embodiment of this application;
FIG. 14 is a schematic diagram of another call processing apparatus according to an embodiment of this application;
FIG. 15 is a schematic diagram of another call processing apparatus according to an embodiment of this application;
FIG. 16 is a schematic diagram of another call processing apparatus according to an embodiment of this application;
FIG. 17 is a schematic diagram of another call processing apparatus according to an embodiment of this application; and
FIG. 18 is a schematic diagram of another call processing apparatus according to an embodiment of this application.

### DESCRIPTION OF EMBODIMENTS

In embodiments of this application, the terms such as "example" or "for example" represent giving an example, an illustration, or a description. Any embodiment or design scheme described as an "example" or "for example" in embodiments of this application should not be explained as being more preferred or having more advantages than another embodiment or design scheme. Exactly, use of the term "example" or "for example" is intended to present a concept in a specific manner.

In embodiments of this application, terms "first", "second", and the like are used merely for the purpose of description, and shall not be construed as indicating or implying relative importance or implying a quantity of indicated technical features. Therefore, a feature limited by "second" or "first" may explicitly or implicitly include one or more of the features.

It can be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It can be further understood that sequence numbers of processes do not mean execution sequences in embodiments of this application. The execution sequences of the processes should be determined based on functions and internal logic of the processes and should not be construed as any limitation on the implementation processes of embodiments of this application.

However, it can be further understood that, determining B based on A does not mean that B is determined based on A only, but B may also be determined based on A and/or other information.

It can be further understood that the term "include" (also referred to as "includes", "including", "comprises", and/or "comprising") is used in this specification to specify existence of the stated features, integers, steps, operations, elements, and/or components, but does not exclude existence or addition of one or more other features, integers, steps, operations, elements, components, and/or groups thereof.

The following describes the technical solutions in embodiments of this application with reference to the accompanying drawings in embodiments of this application.

An IP multimedia subsystem (IP multimedia subsystem, IMS) is a universal network architecture for providing multimedia services over IP networks. In an IMS network, a session initiation protocol (session initiation protocol, SIP) is used as a main signaling protocol, so that operators can provide end-to-end all-IP multimedia services for users. In the SIP, media negotiation of each session participant, for example, negotiation of audio video codec, a host address, and a network transmission protocol, is completed by using a session description protocol (session description protocol, SDP) and an offer/answer (offer/answer, OA for short) mechanism.

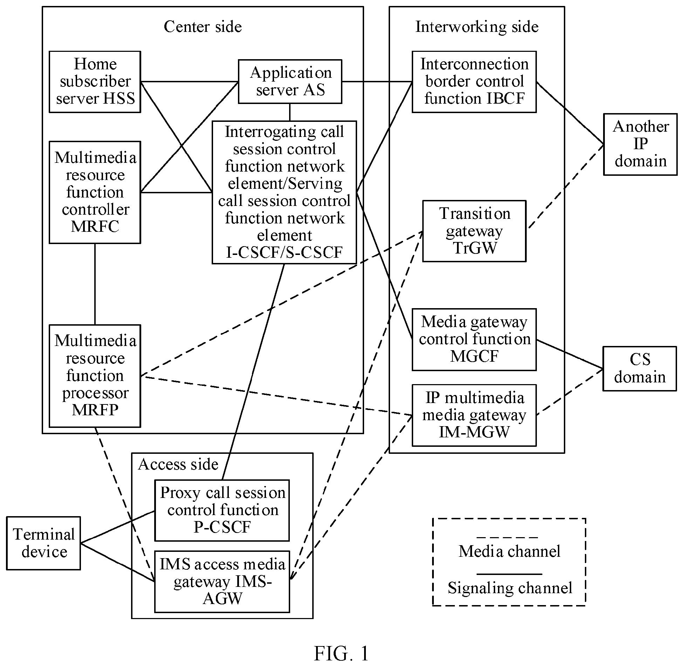

FIG. 1 is a schematic diagram of an IMS network architecture. The IMS network architecture may be divided into an access side, a center side, and an interworking side. For ease of description, FIG. 1 only shows network elements related to media processing in an IMS network. In the IMS network architecture, a media processing network element can be directly controlled by only a specific media control network element. For example, the media control network element completes media negotiation with another network element or terminal device by using SIP signaling and an SDP protocol, and then controls the media processing network element to complete actual media processing and media data transmission. An H.248 gateway control protocol is generally used between the media control network element and the media processing network element to manage media processing nodes and a connection relationship between the media processing nodes.

The access side includes an IMS access media gateway (IMS access media gateway, IMS-AGW), a proxy call session control function (proxy call session control function, P-CSCF) network element, and the like. The IMS-AGW is a media processing network element on the access side, and is configured to implement functions such as media access proxy and forwarding, network address translation (network address translation, NAT) traversal, and audio codec conversion for the terminal device. The P-CSCF is configured to control the IMS-AGW to complete media processing on the access side.

The center side includes a multimedia resource function processor (multimedia resource function processor, MRFP), a multimedia resource function controller (multimedia resource function controller, MRFC), a home subscriber server (home subscriber server, HSS), an application server (application server, AS), an interrogating call session control function (interrogating CSCF, I-CSCF) network element, a serving call session control function (serving CSCF, S-CSCF) network element, and the like. The MRFP is a media processing network element on the center side, and is configured to provide functions such as announcement playing and digit collection, and a voice conference. The MRFC is configured to control the MRFP to complete the functions such as announcement playing and digit collection, and a voice conference.

The interworking side includes an interconnection border control function (interconnection border control function, IBCF) network element, a transition gateway (transition gateway, TrGW), an IP multimedia media gateway (IP multimedia media gateway, IM-MGW), a media gateway control function (media gateway control function, MGCF) network element, and the like. The TrGW and the IM-MGW are media processing network elements on the interworking side, and are configured to implement media interworking between the IMS network and another network. For example, the TrGW is configured to implement interworking between the IMS network and a media plane of another IP network, including media NAT, quality of service (quality of service, QoS) control, codec conversion, and the like. The IM-MGW is configured to implement interworking between the IMS network and a media plane of another non-IP network (for example, a public switched telephone network (public switched telephone network, PSTN) and a public land mobile network (public land mobile network, PLMN)). The IBCF is configured to control the TrGW to implement media interworking control with another IP domain. The MGCF is configured to control the IM-MGW to implement media interworking control with a non-IP domain.

The IMS network supports various services and a plurality of access manners. The IMS network provides consistent and convergent service experience for users using different access manners. For example, a multiparty call based on the IMS network may provide a multi-connection call capability for a user, in other words, three or more users (participants) can simultaneously participate in a same session. This facilitates communication between a plurality of users and reduces costs of information communication and transferring between the plurality of users. An existing standard protocol 3GPP TS 24.147 describes a multiparty call service process in the IMS network architecture. A multipoint control unit (multipoint control unit, MCU) architecture model is used in the IMS network. The AS provides service logic control of a multiparty call, implements service triggering, and controls the MRFC/MRFP to implement functions such as conference resource allocation, call connection, and participant number control. The MRFP is a media server and provides stream mixing and media forwarding for the multiparty call.

However, in an IMS half-call model, regardless of whether participants of the multiparty call access the IMS network through a same physical IMS-AGW, each participant of the multiparty call needs an independent IMS-AGW logically, and a real-time transport protocol (real-time transport protocol, RTP) media needs to be forwarded once by each of the IMS-AGW on a calling side, the MRFP on the center side, and the IMS-AGW on a called side. That is, in the IMS half-call model, when the participants of the multiparty call perform the multiparty call, end-to-end media data transmission can be implemented through multi-hop forwarding, resulting in media roundabout. A service transmission delay is increased. In addition, the multiparty call using the MCU architecture requires the MRFP on the center side to provide an audio mixing function, which consumes a large amount of resources of the MRFP. Currently, the MRFP on the center side can provide only a multiparty voice call, but cannot support a multiparty video call and a future multiparty media service.

Therefore, in the IMS half-call model, how to avoid multi-hop media forwarding and reduce a service processing delay, and how to reduce media processing overheads, and support the multiparty video call and the future multiparty media service become problems to be resolved.

To resolve the foregoing problems, an embodiment of this application provides a call processing method. The call processing method is based on the IMS network architecture, and is performed by a newly added unified media function (unified media function, UMF) network element. The UMF can provide a media capability through the access side to reduce media roundabout and meet a requirement of a delay-sensitive service such as extended reality on the IMS network architecture. In addition, the UMF directly forwards respective media streams of terminal devices participating in a multiparty call without performing audio mixing processing on the plurality of media streams. This helps reduce performance consumption of a media server.

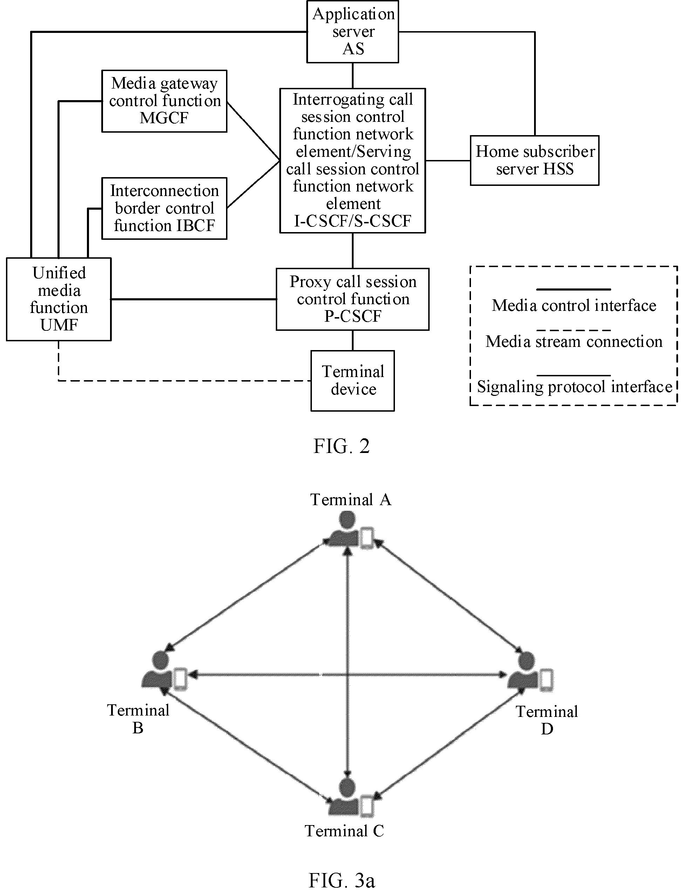

The call processing method provided in this embodiment of this application is applied to a network architecture shown in FIG. 2. The network architecture shown in FIG. 2 includes the newly added UMF in this embodiment of this application. In addition to integrating the media processing network elements, for example, the IMS-AGW, the MRFP, and the TrGW, in the current IMS network architecture in a function, the UMF may also provide a media processing function, for example, a data channel service (data channel service), required by a new future service. The UMF may be simultaneously deployed on the access side, the center side, or the interworking side. All the network elements in the IMS trusted domain can control the UMF. The UMF is configured to provide rich media processing capabilities, to reduce media roundabout, and meet a requirement of a future low-delay sensitive service such as XR.

The network architecture shown in FIG. 2 further includes an AS, an MGCF, an IBCF, an I-CSCF, an S-CSCF, a P-CSCF, an HSS, and a terminal device. A function of each network element or device is similar to a function of the corresponding network element or device in the existing IMS network, and future media capability evolution is further supported. For example, in this embodiment of this application, during media function control (for example, when the P-CSCF controls the UMF to perform basic call setup), the UMF is controlled by using a non-OA mechanism through a media gateway control protocol (for example, the H.248 protocol) interface or a service-based interface, so that signaling renegotiation and media redirection are avoided when a media service is performed, and an IMS signaling plane (which includes OA negotiation) and a media capability are decoupled. This facilitates supporting evolution of a future media capability. It can be noted that the network architecture shown in FIG. 2 focuses on a media service, and does not show a network element related to a non-media service. The CSCF generally does not participate in the media service. Therefore, a control relationship between the CSCF and the UMF is not reflected in FIG. 2, but this is not limited in this embodiment of this application.

The terminal device in FIG. 2 may also be referred to as a terminal and may have wireless receiving and sending functions. The terminal device may be deployed on land, including an indoor or outdoor device, a handheld device, or an in-vehicle device; or may be deployed on water (for example, on a steamer); or may be deployed in air (for example, on an air plane, a balloon, or a satellite). The terminal device may be user equipment (user equipment, UE). The UE includes a handheld device, an in-vehicle device, a wearable device, or a computing device having a wireless communication function. For example, the UE may be a mobile phone (mobile phone), a tablet computer, or a computer having wireless receiving and sending functions. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal may be a terminal, or may be an apparatus, for example, a chip system, that can support the terminal in implementing this function. The apparatus may be installed in the terminal. In embodiments of this application, the chip system may include a chip, or may include a chip and another discrete component. In technical solutions provided in embodiments of this application, an example in which the apparatus configured to implement the function of the terminal is a terminal describes the technical solutions provided in embodiments of this application.

The following describes related concepts in embodiments of this application.
1. Network architecture solution for multiparty communication: Currently, there are the following three network architecture solutions for multiparty communication.

Solution 1: Mesh architecture. FIG. 3a is a schematic diagram of a Mesh architecture used in multiparty communication. In the Mesh architecture, every two of a plurality of terminals are connected, to form a mesh structure. For example, a total of four terminals A to D in FIG. 3a perform many-to-many communication. When the terminal A wants to share media data (for example, audio and a video), the terminal A needs to separately send the media data to the terminal B, the terminal C, and the terminal D. Similarly, when the terminal B wants to share media data, the terminal B needs to separately send the media data to the terminal A, the terminal C, and the terminal D, and so on. It can be learned that when a multiparty call is performed by using the Mesh architecture, a high bandwidth requirement is imposed on each terminal.

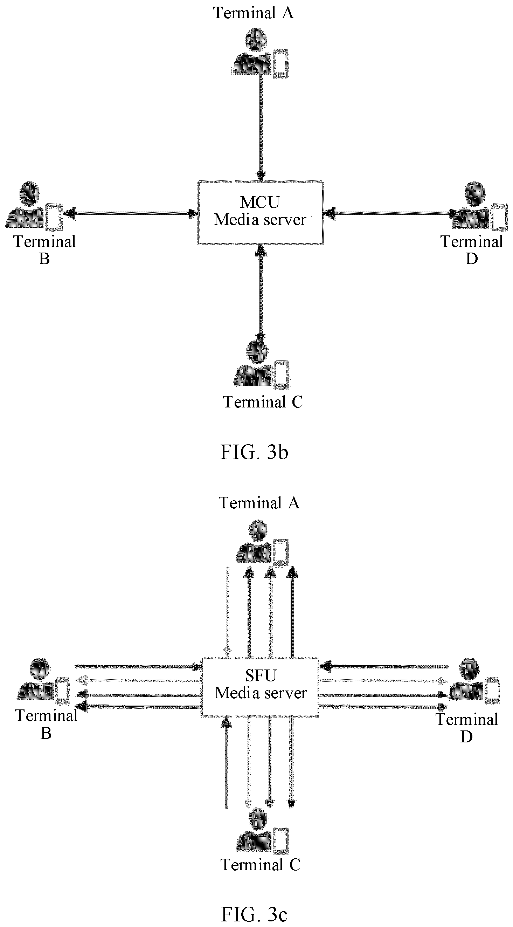

Solution 2: MCU architecture. FIG. 3b is a schematic diagram of an MCU architecture used in multiparty communication. The MCU architecture is a star structure formed by one MCU server and a plurality of terminals. The terminal A to the terminal D send to-be-shared audio-video streams to the MCU server, and the MCU server mixes audio-video streams of all the terminals in a same session to generate a mixed audio-video stream. The MCU server then separately sends the mixed audio-video stream to the terminal A to the terminal D, so that each terminal can see/hear audio and a video of another terminal. The MCU server end is an audio-video mixer. When the MCU architecture is used for multiparty communication, a requirement on processing performance of the MCU server is high, and service processing pressure of the MCU server is very high.

Solution 3: Selective forwarding unit (selective forwarding unit, SFU) architecture. FIG. 3c is a schematic diagram of an SFU architecture used in multiparty communication. The SFU architecture is a star structure formed by one SFU server and a plurality of terminals. Different from the MCU media server, an SFU media server does not mix audio-video streams. After receiving an audio-video stream shared by a terminal, the SFU media server directly forwards the audio-video stream to another terminal in a multiparty call. That is, the SFU server is actually an audio-video routing forwarder. Currently, all WebRTC-based multiparty communication media servers such as Kurento, Licode, MediaSoup, and Janus in the industry use the SFU architecture. Compared with the MCU mode, the SFU media server consumes less performance but consumes more bandwidth than the MCU.

2. IMS half-call model: Regardless of whether a calling terminal device and a called terminal device access an IMS network through a physical IMS-AGW, there are two IMS-AGWs on a calling side and a called side logically, and two media contexts need to be established.

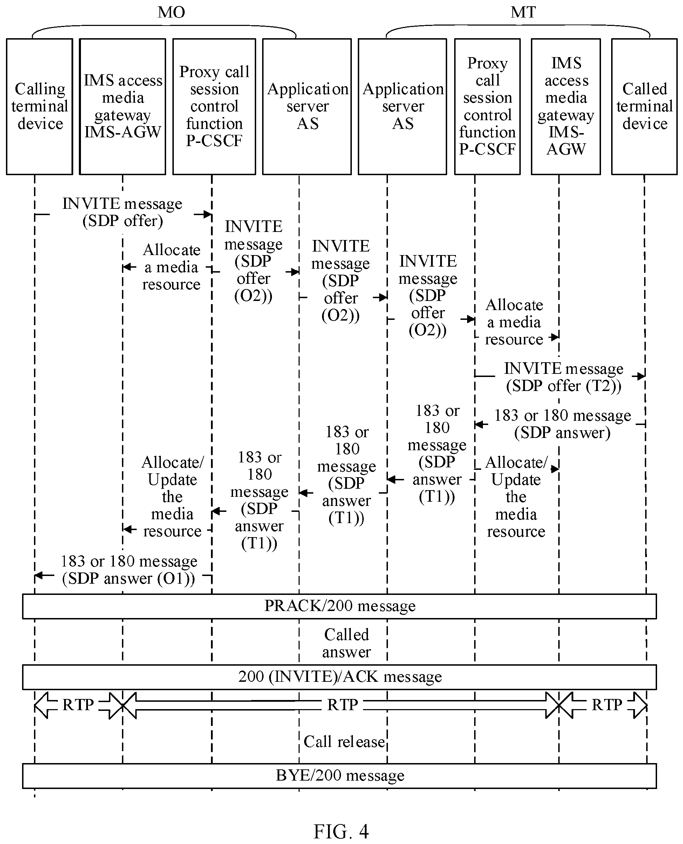

3. IMS basic call and media negotiation: FIG. 4 is a schematic flowchart of IMS basic call and media negotiation. The basic call and media negotiation process is implemented through interaction among the terminal device, the IMS-AGW, the P-CSCF, and the CSCF/AS. It can be noted that, because the IMS is a half-call model, regardless of whether a calling side and a called side access through a same physical IMS network, call processing of the calling side and the called side is performed by two different logical entities. That is, in FIG. 4, a logical uplink (mobile original, MO) includes a calling terminal device, a calling IMS-AGW, a calling P-CSCF, and a calling CSCF/AS, and a downlink (mobile terminated, MT) includes a called terminal device, a called IMS-AGW, a called P-CSCF, and a called CSCF/AS. The basic call and media negotiation process shown in FIG. 4 includes the following steps.
A: The calling terminal device includes media information (SDP) of the calling terminal device in an initial INVITE message, where the media information is an SDP Offer.
B: The calling P-CSCF receives the INVITE message, and records and stores the media information of the calling terminal device. In addition, the calling P-CSCF indicates the calling IMS-AGW to allocate an output media endpoint O2, where corresponding local media information is SDP (O2). The calling P-CSCF replaces the calling media information with the SDP (O2) and transfers the SDP (O2) to a subsequent network element through SIP signaling. For example, the SIP signaling is sent by the calling P-CSCF to the calling CSCF/AS, then sent by the calling CSCF/AS to the called CSCF/AS, and then sent by the called CSCF/AS to the called P-CSCF.
C: The called P-CSCF receives the INVITE message, and records and stores the calling side media information. In addition, the called P-CSCF indicates the called IMS-AGW to allocate an output media endpoint T2, where corresponding local media information is SDP (T2). The called P-CSCF sends the SDP (T2) to the called terminal device.
D: The called terminal device includes media information in a first reliable 1XX (183 or 180) response message, where the media information is an SDP Answer.
E: The called P-CSCF receives the 1XX response message, and updates remote media information of T2 to the media information of the called terminal device. In addition, the called P-CSCF indicates the called IMS-AGW to allocate an input media endpoint T1, where corresponding local media information is SDP (T1), and corresponding remote media information is the previously stored calling media information SDP (O2).
F: The called P-CSCF indicates the called IMS-AGW to associate T1 with T2, replaces the called SDP with the SDP (T1), and then transfers the SDP (T1) to a subsequent network element through SIP signaling. For example, the SIP signaling is sent by the called P-CSCF to the called CSCF/AS, then sent by the called CSCF/AS to the calling CSCF/AS, and then sent by the calling CSCF/AS to the calling P-CSCF. If the called terminal device does not support a 1XX response reliable transmission mechanism defined in a standard protocol RFC3262, the called terminal device may include the SDP Answer in a 200 (INVITE) response.
G: The calling P-CSCF receives the called SDP Answer (T1) and updates remote media information of O2 to the SDP(T1). The calling P-CSCF indicates the calling IMS-AGW to allocate an input media endpoint O1, where corresponding local media information is SDP (O1), and corresponding remote media information is the previously stored media information of the calling terminal device.
H: The calling P-CSCF indicates the calling IMS-AGW to associate O1 with O2, replaces the calling SDP with the SDP (O1), and then transfers the SDP (O1) to the calling terminal device through SIP signaling.

Based on the foregoing, the media negotiation process is completed, and the calling terminal device and the called terminal device may transmit RTP media.

Optionally, if the calling side does not include the media information (a normal start process) in the initial INVITE message, the media negotiation may be completed in the following two processes.
(1) The called side includes an SDP Offer in a first reliable 18X (183 or 180) response message, and the calling side replies an SDP Answer through a PRACK message, to complete media negotiation.
(2) The called side includes an SDP Offer in a 200 (INVITE) response message, and the calling side replies an SDP Answer through an ACK message, to complete media negotiation.

Optionally, after a call between the calling terminal device and the called terminal device ends, the calling side and the called side perform call release. For a specific implementation, refer to descriptions in an existing protocol standard. Details are not described herein again.

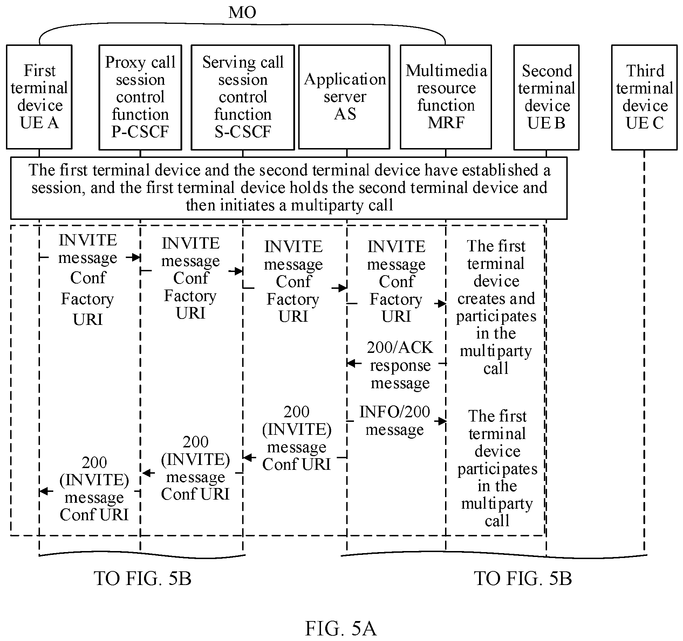

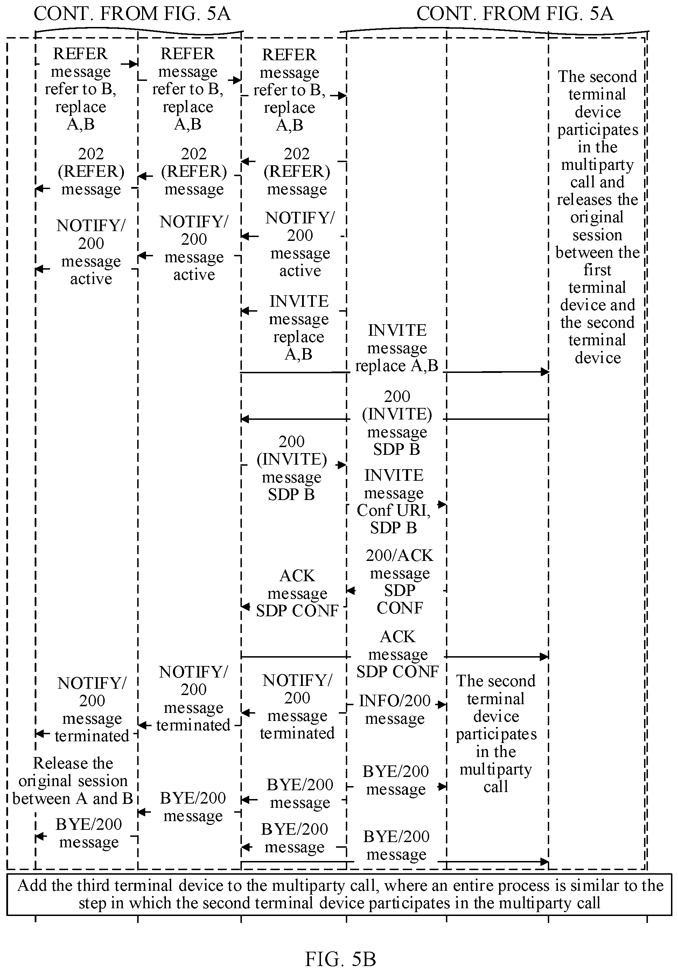

4. Multiparty call based on an MCU architecture: FIG. 5A and FIG. 5B are a schematic diagram of a multiparty call process based on an MCU architecture in an IMS network. The multiparty call process is implemented through interaction among terminal devices (which include a first terminal device, a second terminal device, and a third terminal device), a P-CSCF, an S-CSCF, an AS, and an MRF (an MRFC and an MRFP are combined, and are collectively referred to as an MRF). It can be noted that, because the IMS is a half-call model, regardless of whether a calling side and a called side access through a same physical IMS network, call processing of the calling side and the called side is performed by two different logical entities. That is, in FIG. 5A and FIG. 5B, a logical uplink (mobile original, MO) includes the first terminal device, the P-CSCF, the S-CSCF, the AS, and the MRF, and a downlink (mobile terminated, MT) includes the second terminal device, the P-CSCF, and the S-CSCF. For ease of description, FIG. 5A and FIG. 5B do not completely show the P-CSCF and the S-CSCF on the MT side, and functions of the P-CSCF and the S-CSCF on the MT side are the same as those of the P-CSCF and the S-CSCF on the MO side, and a processing process is also the same as that on the MO side. The multiparty call process shown in FIG. 5A and FIG. 5B includes the following steps.
A: During a call between UE-A and UE-B, the UE-A holds the UE-B and initiates a multiparty call.
B: The UE-A sends an INVITE message, where a parameter request-uri in the INVITE message is a conference factory uri, indicating that the INVITE message is used for requesting to create the multiparty call. After receiving the INVITE message, the AS applies for a conference channel from the MRF and adds the UE-A to the multiparty call.
C: The UE-A sends a REFER message, where a refer-to header field in the REFER message is B, indicating that the REFER message indicates the AS to add the UE-B to the multiparty call. In addition, the REFER message further carries a replace parameter, where the parameter indicates the AS to newly create a multiparty call to replace an original session between the UE-A and the UE-B.
D: After receiving the REFER message, the AS sends an INVITE message to the UE-B. The INVITE message carries a replace header field and information about the original session between the UE-A and the UE-B.
E: The AS receives a 200 response message from the UE-B, applies for a multiparty call resource from the MRF, and adds the UE-B to the multiparty call. In addition, the AS releases an announcement playing resource (call hold) applied for the UE-B and sends a BYE message to the UE-A and the UE-B to release the original session between the UE-A and the UE-B.
F: The UE-A requests to add UE-C to the multiparty call. A specific implementation process is similar to the process in which the UE-A requests to add the UE-B to the multiparty call. A difference is that if no session is originally established between the UE-A and the UE-C, the refer-to header field in the REFER message sent by the UE-A is C and does not carry the replace parameter. The INVITE message sent by the AS to the UE-C does not carry the replace header field.

It can be noted that FIG. 5A and FIG. 5B show that only three terminal devices participate in the multiparty call, and more terminal devices (for example, a fourth terminal device and a fifth terminal device) may participate in the multiparty call. A specific implementation is similar to that of the three terminal devices in FIG. 5A and FIG. 5B, and is not limited in this embodiment.

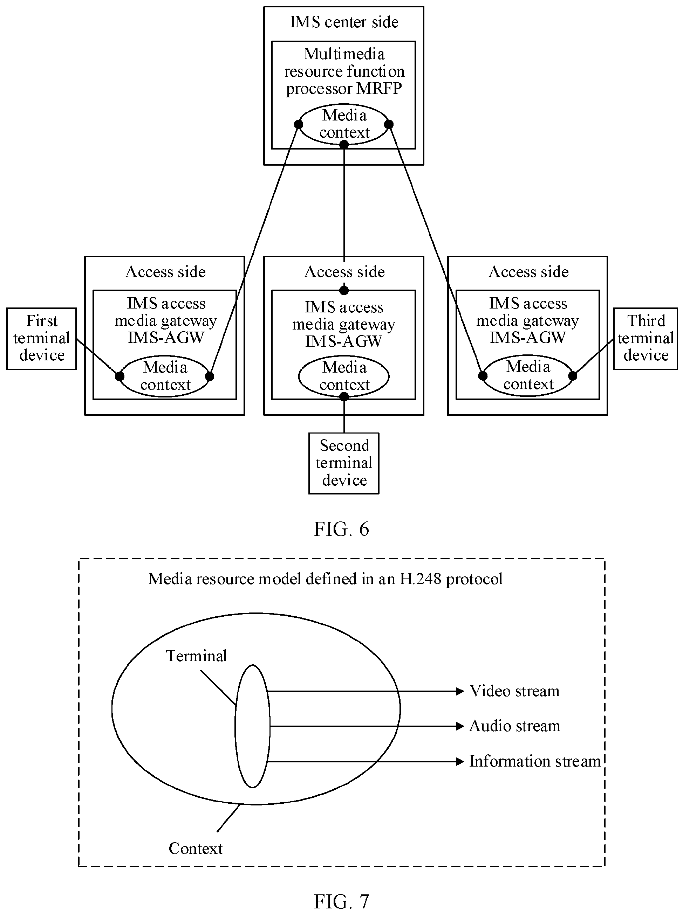

FIG. 6 is a schematic diagram of a media connection topology after a multiparty call process based on an MCU architecture in an IMS network is completed. In an IMS half-call model, regardless of whether participants of a multiparty call access an IMS network through a same physical IMS-AGW, each participant of the multiparty call needs an independent IMS-AGW logically. For example, RTP media of the first terminal device needs to be forwarded once by each of the IMS-AGW corresponding to the first terminal device, the MRFP on the center side, and the IMS-AGW corresponding to the second terminal device (at least three hops) before being transmitted to the second terminal device, as shown in FIG. 6.

5. Media resource model based on a media gateway control protocol: In addition to an OA mechanism based on an SDP protocol, the media resource model based on the media gateway control protocol (for example, H.248) is also used for controlling a media resource in a live network. FIG. 7 is a media resource model defined by an H.248 protocol. The media resource model includes a terminal (terminal) and a context (context). The terminal is a logical entity, and is configured to send and receive one or more media. The media type may be a narrowband slot, a simulated line, an IP-based RTP stream, or the like. For example, as shown in FIG. 7, the terminal may send a video stream (video stream), an audio stream (audio stream), an information stream (message stream), and the like. It can be noted that one terminal can belong to only one context. The context indicates a connection relationship between terminals, and describes a topological relationship between the terminals and a parameter for media mixing/switching. Based on the media resource model shown in FIG. 7, the H.248 protocol further defines a corresponding protocol interface, and a control network element manages internal media resources and a connection relationship through the protocol interface. The protocol interface includes, but not limited to: an add command (used to newly add a terminal in a context), a Modify command (used to modify an attribute, an event, and the like of a terminal), a Subtract command (used to delete a terminal from a context and return a statistical status of the terminal), a Move command (used to move a terminal from one context to another context), and a Notify command (used to notify a control network element of a detected event).

6. Media resource model based on a service-based interface: Most open source media servers in the industry provide service-based interfaces, for example, REST API or RPC, to control a media processing network element. A typical example is Kurento. A logical architecture of Kurento includes modules such as a Kurento media server (KurentoMedia Server, KMS) and an application server (application server, AS). The KMS is equivalent to a media processing network element in the IMS network, the AS is equivalent to a media control network element in the IMS network, and the AS controls the KMS by using a Kurento protocol. The Kurento protocol uses a websocket-based JSON-RPC interface. Similar to the H.248 protocol, the KMS also provides a corresponding media resource model. The Kurento protocol describes management of media resources and a connection relationship thereof. The KMS media resource model adopts an object-oriented concept and abstracts the media resources into various objects. The main media resource objects are a Media Pipeline and Media Elements. The KMS describes a media service by using a pipeline architecture. The Media Pipeline object indicates a media processing pipeline and describes a connection topological between media processing objects, which is equivalent to the context in the H.248 protocol. The Media Elements indicate media processing component objects. Media processing components are classified into endpoints, filters, hubs, and the like based on functions thereof. Endpoints mainly send and receive media streams, which are equivalent to the terminals in the H.248. The Filters provide media processing capabilities, for example, audio and video codec. The KMS provides rich media processing capabilities through the Filters and has good expansibility. Similar to the H.248 protocol, the Kurento protocol describes media resource management (including creation, modification, and deletion), event subscription, and a connection topological relationship between media resources. A format of the Kurento protocol is JSON (or another format may be used).

The following describes in detail a method in this embodiment of this application.

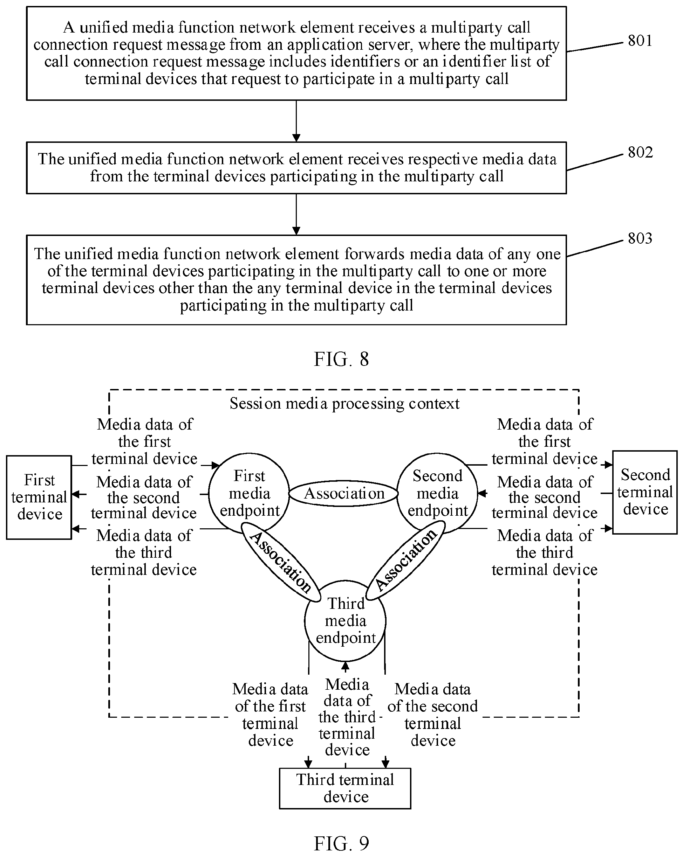

FIG. 8 is a schematic flowchart of a call processing method according to an embodiment of this application. The call processing method is performed by a unified media function network element UMF, and includes the following steps.

801: A unified media function network element receives a multiparty call connection request message from an application server, where the multiparty call connection request message includes identifiers or an identifier list of terminal devices that request to participate in a multiparty call.

When a terminal device in an IMS network requests to initiate a multiparty call, the application server may indicate the unified media function network element UMF to create the multiparty call. The UMF in this embodiment of this application is used as a media server, and may replace an existing MRFP to implement the multiparty call (which includes a voice call, a video call, and the like). The application server sends the multiparty call connection request message to the unified media function network element, where the multiparty call connection request message indicates the unified media function network element to create the multiparty call.

In an implementation, the multiparty call connection request message includes the identifiers of the terminal devices that request to participate in the multiparty call. For example, a first terminal device in the IMS network requests to create a multiparty call, and the first terminal device first sends an INVITE message to a P-CSCF, where a request-uri in the INVITE message is a conference factory uri, indicating that a service type is a conference calling (the multiparty call). The P-CSCF sends the INVITE message to an AS, where the INVITE message further includes an identifier (for example, SIP information of the first terminal device) of the first terminal device. The AS determines a multiparty call connection request message based on the INVITE message, and sends the multiparty call connection request message to the UMF, to indicate the UMF to add the first terminal device to the multiparty call.

In an implementation, the multiparty call connection request message includes the identifier list of the terminal devices that request to participate in the multiparty call. For example, a first terminal device in the IMS network requests to create a multiparty call, and requests to add both a second terminal device and a third terminal device to the multiparty call. A request-uri in an INVITE message sent by the first terminal device to the P-CSCF is a conference factory uri, and the INVITE message further includes an identifier list of terminal devices that request to participate in the multiparty call, where the identifier list includes respective identifiers (for example, respective SIP information) of the first terminal device, the second terminal device, and the third terminal device. It can be noted that in this embodiment of this application, the terminal devices participating in the multiparty call include at least three terminal devices.

In an implementation, after receiving the multiparty call connection request message, the unified media function network element may create, based on the multiparty call connection request message, respective media endpoints for the terminal devices participating in the multiparty call. The media endpoint in this embodiment of this application is similar to the terminal in the media resource model shown in FIG. 7, and is a logical entity configured to send and receive one or more media. A media endpoint (endpoint) is configured to identify a quintuple of an IP connection, including respective IP addresses, port addresses, and transmission types of a local end and a remote end. The IP address and the port address of the local end of the endpoint are an IP address and a port address of a connected device. For example, if a first media endpoint is created for the first terminal device, an IP address and a port address of a local end of the first media endpoint are an IP address and a port address of the first terminal device. The IP address and the port address of the remote end of the endpoint are an IP address and a port address that correspond to a resource or a device to be connected. The transmission type may include, but not limited to, an RTP over user datagram protocol (user datagram protocol, UDP) or a data channel (data channel) over UDP/a datagram transport layer security protocol (datagram transport layer security, DTLS)/a stream control transmission protocol (stream control transmission protocol, SCTP).

Different media endpoints are distinguished by using resource identifiers of the media endpoints, for example, by using uniform resource locators (uniform resource locators, URLs). The resource identifier of the media endpoint is EndpointURL. A format of EndpointURL is endpoints/{endpoint_id}. endpoints indicate that the URL is EndpointURL, and {endpoint_id} indicates an ID of endpoint and is dynamically allocated during running. It may be understood that, when creating the first media endpoint, the UMF also creates a resource identifier of the first media endpoint. The resource identifier of the first media endpoint is, for example, Endpoint1URL.

Optionally, the unified media function network element further creates a first media stream for the first terminal device based on a first media connection request message. A media stream in this embodiment of this application is similar to the audio stream and the like in the media resource model shown in FIG. 7, and includes detailed information of the media stream. For example, the media stream includes encoding/decoding information of audio/a video. There may be a plurality of media streams on one endpoint, for example, a plurality video streams on one endpoint in a multiparty call, and a plurality of channels on a data channel. Different media streams are distinguished by using resource identifiers of the media streams. For example, the resource identifier of the media stream is StreamURL, and a format of StreamURL is streams/{stream_id}. streams indicate that the URL is StreamURL, and {stream_id} indicates an ID of Stream and is dynamically allocated during running. It may be understood that, when creating the first media stream, the UMF also creates a resource identifier of the first media stream. For example, the resource identifier of the first media stream is Stream 1 URL.

Optionally, the unified media function network element further creates a session media processing context (Context) based on the first media connection request message. The session media processing context may be considered as a logical container for recording the media endpoint and the media stream. For example, the session media processing context is an RTP processing entity or a data channel processing entity. One Context may have a plurality of Endpoints, and one Endpoint may have a plurality of Streams. Different session media processing contexts are distinguished by using resource identifiers of the session media processing contexts. For example, the resource identifier of the session media processing context is ContextURL, and a format of ContextURL is {umf_domain}/contexts/{context_id}. {umf_domain} indicates a domain name of the UMF, contexts indicate that the URL is ContextURL, and {context id} indicates an ID of Context and is dynamically allocated during running.

802: The unified media function network element receives respective media data from the terminal devices participating in the multiparty call.

803: The unified media function network element forwards media data of any one of the terminal devices participating in the multiparty call to one or more terminal devices other than the any terminal device in the terminal devices participating in the multiparty call.

In an implementation, based on the description in step 801, the unified media function network element creates, based on the multiparty call connection request message, the respective media endpoints and media streams for the terminal devices participating in the multiparty call, for transmitting the media data between the terminal devices participating in the multiparty call. For example, the terminal devices participating in the multiparty call include a first terminal device, a second terminal device, and a third terminal device. The UMF creates a first media endpoint and a plurality of first media streams for the first terminal device, a second media endpoint and a plurality of second media streams for the second terminal device, and a third media endpoint and a plurality of third media streams for the third terminal device. It may be understood that, there may be a plurality of media streams for one media endpoint, which are used for transmitting media data between different terminal devices, to implement a multiparty call. For example, the unified media function network element may receive media data from the first terminal device through the first media endpoint, and separately send the media data of the first terminal device to the second terminal device and the third terminal device through the plurality of first media streams. For another example, the unified media function network element may receive media data from the second terminal device and the third terminal device through the plurality of first media streams, and send the media data of the second terminal device and the third terminal device to the first terminal device through the first media endpoint.

In an implementation, the unified media function network element receives association indication information from the application server, and associates, based on the association indication information, a media endpoint of any one of the terminal devices participating in the multiparty call with respective media endpoints of one or more terminal devices other than the any terminal device in the terminal devices participating in the multiparty call.

For example, FIG. 9 is a session media processing context created by a UMF for a multiparty call according to an embodiment of this application. The session media processing context includes a first media endpoint, a second media endpoint, a third media endpoint, a plurality of first media streams, a plurality of second media streams, and a plurality of third media streams. A resource identifier of the session media processing context is ContextURL, and a format of ContextURL is {umf_domain}/contexts/{context_id}. It is assumed that {umf_domain} is umf.huawei.com and an ID of Context is 1000, ContextURL is umf.huawei.com/contexts/1000. It is assumed that an ID of the first media endpoint is 5000, Endpoint1URL is umf.huawei.com/contexts/1000/endpoints/5000. It is assumed that an ID of the second media endpoint is 6000, Endpoint2URL is umf.huawei.com/contexts/1000/endpoints/6000. It is assumed that an ID of the third media endpoint is 7000, Endpoint3URL is umf.huawei.com/contexts/1000/endpoints/7000. In addition, the unified media function network element associates the first media endpoint, the second media endpoint, and the third media endpoint respectively through an association. For example, as shown in FIG. 9, the first media endpoint is respectively associated with the second media endpoint and the third media endpoint, the second media endpoint is respectively associated with the first media endpoint and the third media endpoint, and the third media endpoint is respectively associated with the first media endpoint and the second media endpoint. For a media stream transmitted by a media endpoint, one input stream may be associated with a plurality of output streams, and a plurality of input streams may be associated with one output stream. If codec attributes of the input stream and the output stream are different, a codec conversion component needs to be added.

In an implementation, the unified media function network element performs multi-stream forwarding through an association between the media endpoint of the any one of the terminal devices participating in the multiparty call and the respective media endpoints of the one or more terminal devices other than the any terminal device in the terminal devices participating in the multiparty call. For example, when the first terminal device needs to send media data to the second terminal device and the third terminal device, the unified media function network element performs multi-stream forwarding to the second terminal device and the third terminal device through an association between the first media endpoint and the second media endpoint and the association between the first media endpoint and the third media endpoint, as shown in FIG. 9.

In an implementation, the unified media function network element sends respective resource identifiers of the terminal devices participating in the multiparty call to the application server. That is, the UMF may send EndpointURL (or StreamURL, or ContextURL) to a control network element in an IMS trusted domain, so that all network elements in the IMS trusted domain can directly control the UMF. Therefore, media resources may be shared in an IMS half-call model. Logically, only one UMF is required, and media forwarding needs to be performed only once. In addition, the media resources are also saved. The UMF transfers a media resource URL. For example, the UMF sends Endpoint1URL, Endpoint2URL, and Endpoint3URL to the AS, and the UMF may further send the URLs to the P-CSCF, thereby facilitating media resource sharing in the IMS network, reducing a quantity of media forwarding hops, avoiding a media service conflict and media collision during multi-AS in-series connection, and reducing media resource waste. The interface provided by the UMF for the IMS network element may use various control protocols, which include, but not limited to, the H.248 media gateway control protocol, RESTful API, RPC, and the like.

In an implementation, the unified media function network element creates, based on the multiparty call connection request message, a selective forwarding unit for the terminal devices participating in the multiparty call, where the selective forwarding unit is configured to perform multi-stream forwarding. That is, a logical entity may be further created inside the UMF as a selective forwarding unit (SFU), and the selective forwarding unit may forward media data of any one of the terminal devices participating in the multiparty call to one or more terminal devices other than the any terminal device in the terminal devices participating in the multiparty call. A specific implementation includes the following steps.
1: The unified media function network element associates the selective forwarding unit with the respective media endpoints of the terminal devices participating in the multiparty call.
2: The unified media function network element performs multi-stream forwarding through an association between a media endpoint of any one of the terminal devices participating in the multiparty call and the selective forwarding unit, and an association between the selective forwarding unit and respective media endpoints of one or more terminal devices other than the any terminal device in the terminal devices participating in the multiparty call.

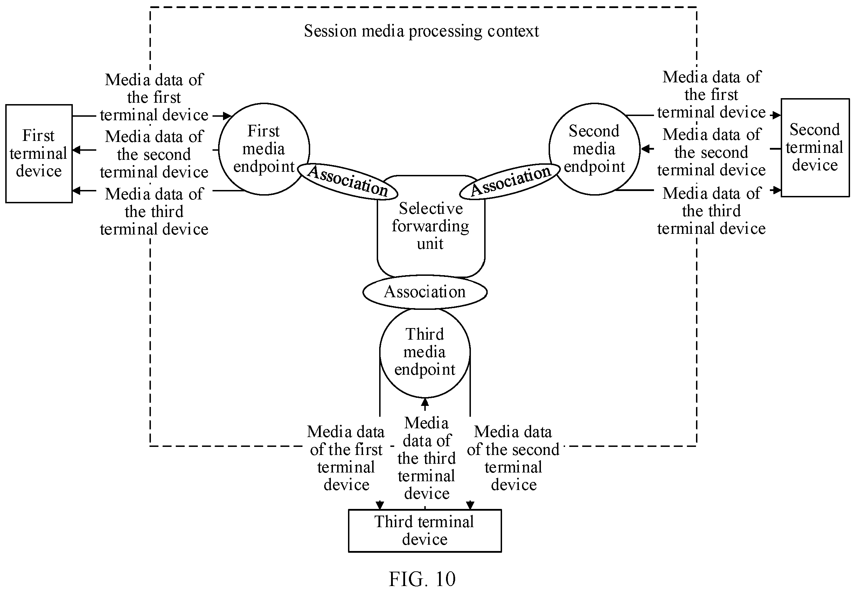

For example, FIG. 10 is another session media processing context created by a UMF for a multiparty call according to an embodiment of this application. The session media processing context further includes a selective forwarding unit SFU. The UMF associates the SFU with the first media endpoint, associates the SFU with the second media endpoint, and associates the SFU with the third media endpoint, as shown in FIG. 10. When the first terminal device sends media data to the second terminal device and the third terminal device, the UMF performs multi-stream forwarding through an association between the first media endpoint and the SFU, the association between the SFU and the second terminal device, and the association between the SFU and the third terminal device.

Optionally, the unified media function network element may alternatively create an SFU for each media endpoint. That is, a media endpoint corresponds to a dedicated SFU. The UMF performs, through an association between each media endpoint and a corresponding SFU, multi-stream forwarding on the media data between the terminal devices participating in the multiparty call.

An embodiment of this application provides a call processing method. In the method, the UMF may provide a media capability through an access side to reduce media roundabout and meet a requirement of a delay-sensitive service such as extended reality on an IMS network architecture. In addition, the UMF directly forwards respective media streams of terminal devices participating in a multiparty call without performing audio mixing processing on the plurality of media streams. This helps reduce performance consumption of a media server.

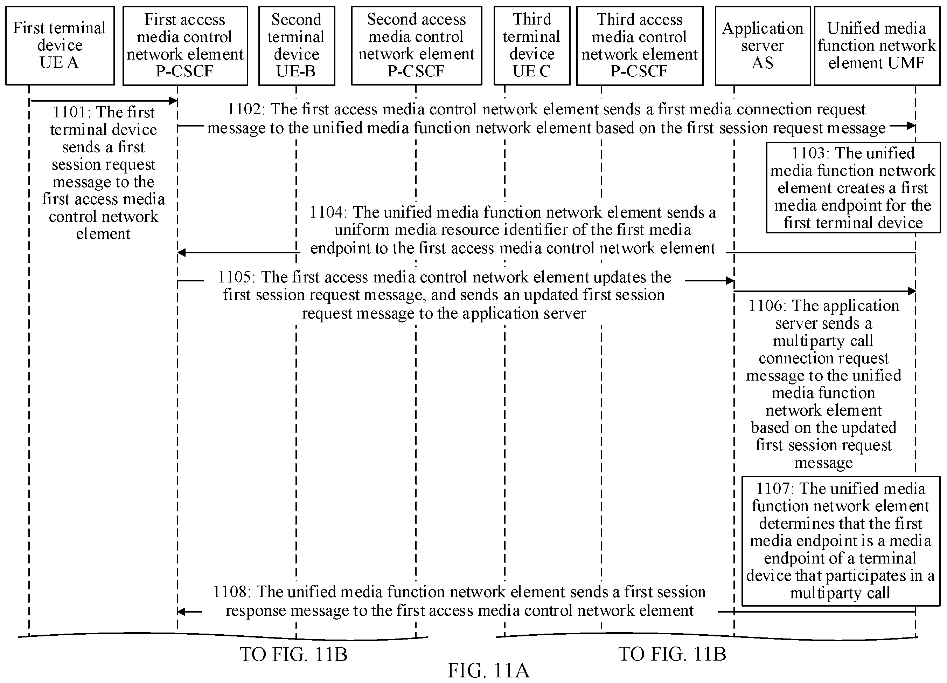

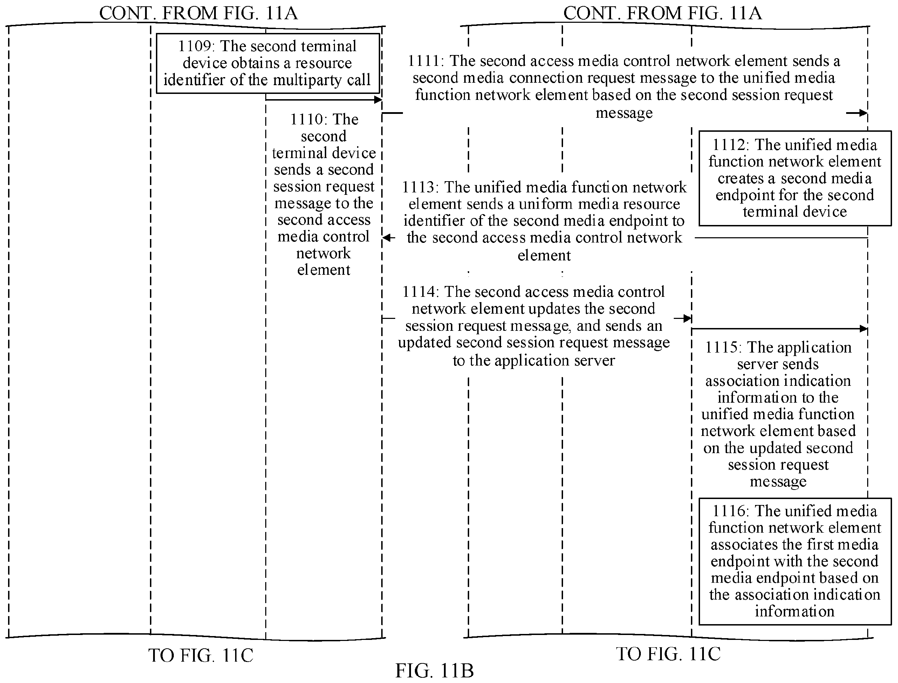

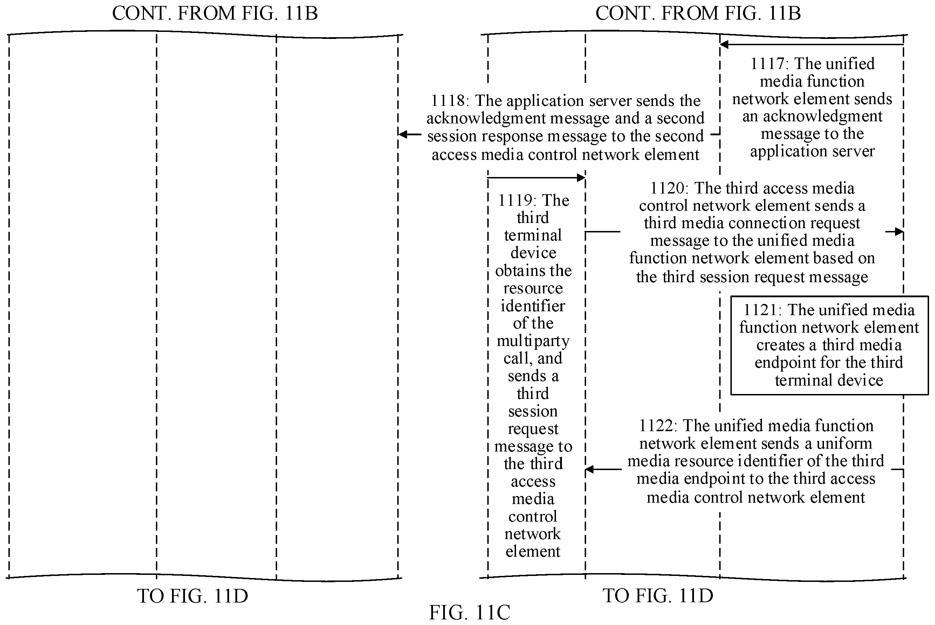

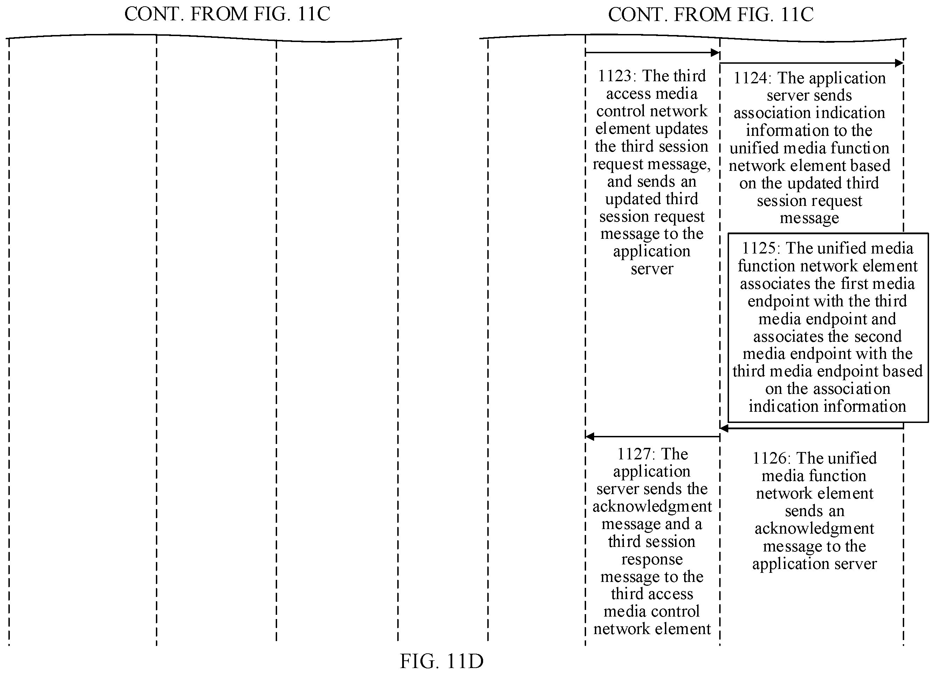

FIG. 11A to FIG. 11D are a schematic flowchart of another call processing method according to an embodiment of this application. In this embodiment, a three-party call is used as an example for description. The call processing method is implemented through interaction among a first terminal device, a second terminal device, a third terminal device, a first access media control network element, a second access media control network element, a third access media control network element, an application server, and a unified media function network element. In this embodiment, it is assumed that no media connection is established between the first terminal device, the second terminal device, and the third terminal device, the call processing method includes the following steps.

1101: The first terminal device sends a first session request message to the first access media control network element, where the first session request message indicates the application server to create a multiparty call.

For example, the first terminal device sends an INVITE message to a first P-CSCF, where a parameter request-uri in the INVITE message is a conference factory uri, indicating that the INVITE message is used for requesting to create a multiparty call. The INVITE message includes an identifier of the first terminal device. Optionally, the INVITE message includes respective identifiers of terminal devices participating in the multiparty call.

1102: The first access media control network element sends a first media connection request message to the unified media function network element based on the first session request message, where the first media connection request message indicates the unified media function network element to create a first media endpoint for the first terminal device. For a specific implementation, refer to the description of the specific implementation in which the UMF creates the media endpoint in the embodiment in FIG. 8. Details are not described herein again.

1103: The unified media function network element creates the first media endpoint for the first terminal device.

1104: The unified media function network element sends a uniform media resource identifier of the first media endpoint to the first access media control network element.

1105: The first access media control network element updates the first session request message, and sends an updated first session request message to the application server.

The first access media control network element adds a uniform media resource identifier Endpoint1URL of the first media endpoint to the first session request message, to update the first session request message.

1106: The application server sends a multiparty call connection request message to the unified media function network element based on the updated first session request message.

1107: The unified media function network element determines that the first media endpoint is a media endpoint of a terminal device that participates in the multiparty call.

1108: The unified media function network element sends a first session response message to the first access media control network element, where the first session response message includes a resource identifier of the first terminal device (the first media endpoint) and a resource identifier of the multiparty call. The resource identifier of the multiparty call may alternatively be a uniform resource identifier URL.

1109: The second terminal device obtains the resource identifier of the multiparty call. That the second terminal device obtains the resource identifier of the multiparty call may include, but not limited to, the following two cases.

Case 1: The second terminal device receives a REFER message from the first terminal device, where the REFER message includes the resource identifier of the multiparty call.

Case 2: The second terminal device obtains the resource identifier of the multiparty call in a manner such as an email or a short message.

In the two cases, after receiving the REFER message, the second terminal device directly sends an INVITE message to the P-CSCF to request to participate in the multiparty call.

1110: The second terminal device sends a second session request message to the second access media control network element, where the second session request message is used for requesting to add the second terminal device to the multiparty call.

1111: The second access media control network element sends a second media connection request message to the unified media function network element based on the second session request message, where the second media connection request message indicates the unified media function network element to create a second media endpoint for the second terminal device.

1112: The unified media function network element creates the second media endpoint for the second terminal device.

1113: The unified media function network element sends a uniform media resource identifier of the second media endpoint to the second access media control network element.

1114: The second access media control network element updates the second session request message, and sends an updated second session request message to the application server.

The second access media control network element adds a uniform media resource identifier Endpoint2URL of the second media endpoint to the second session request message, to update the second session request message.

1115: The application server sends association indication information to the unified media function network element based on the updated second session request message.

1116: The unified media function network element associates the first media endpoint with the second media endpoint based on the association indication information.

1117: The unified media function network element sends an acknowledgment message to the application server.

1118: The application server sends the acknowledgment message and a second session response message to the second access media control network element, where the second session response message includes a resource identifier of the second terminal device (the second media endpoint).

1119: The third terminal device obtains the resource identifier of the multiparty call, and sends a third session request message to the third access media control network element, where the third session request message is used for requesting to add the third terminal device to the multiparty call. A specific implementation is similar to the step corresponding to the second terminal device, and details are not described herein again.

1120: The third access media control network element sends a third media connection request message to the unified media function network element based on the third session request message, where the third media connection request message indicates the unified media function network element to create a third media endpoint for the third terminal device.

1121: The unified media function network element creates the third media endpoint for the third terminal device.

1122: The unified media function network element sends a uniform media resource identifier of the third media endpoint to the third access media control network element.

1123: The third access media control network element updates the third session request message, and sends an updated third session request message to the application server.

The third access media control network element adds a uniform media resource identifier Endpoint3URL of the third media endpoint to the third session request message, to update the third session request message.

1124: The application server sends association indication information to the unified media function network element based on the updated third session request message.

1125: The unified media function network element associates the first media endpoint with the third media endpoint and associates the second media endpoint with the third media endpoint based on the association indication information.

1126: The unified media function network element sends an acknowledgment message to the application server.

1127: The application server sends the acknowledgment message and a third session response message to the third access media control network element, where the third session response message includes a resource identifier of the third terminal device (the third media endpoint).

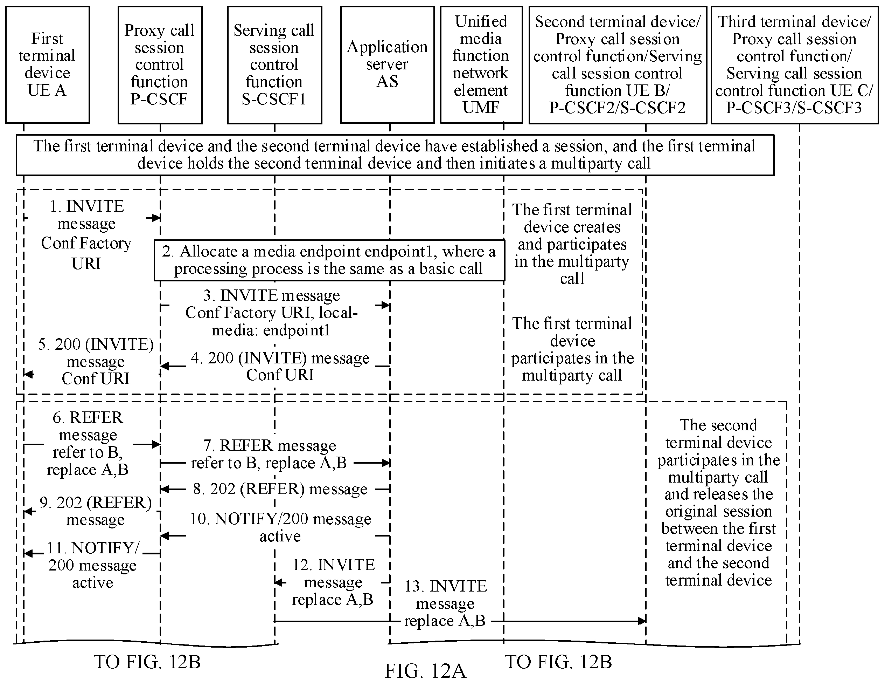

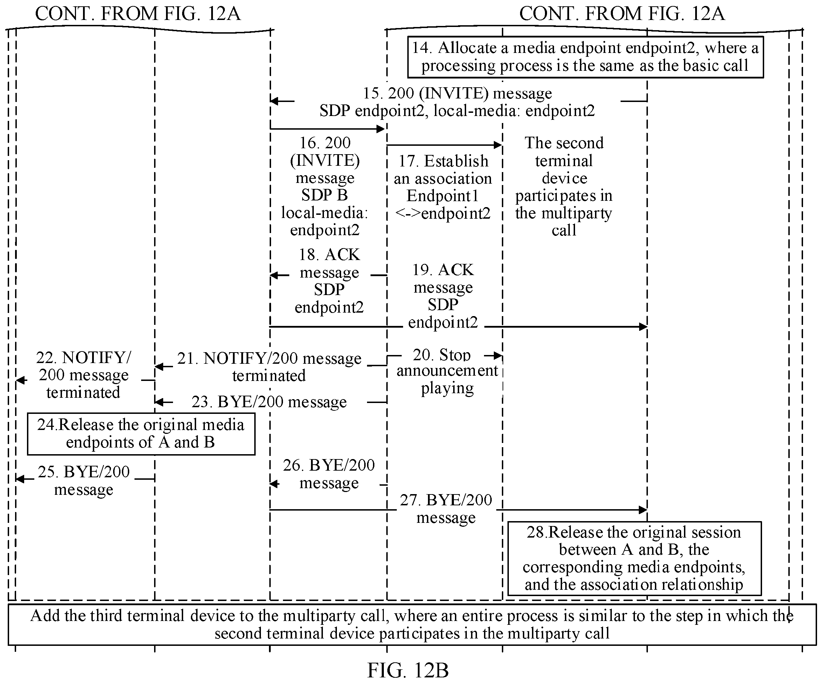

The following describes in detail an application embodiment in which the call processing methods shown in FIG. 8 to FIG. 11A to FIG. 11D are applied to a specific scenario. FIG. 12A and FIG. 12B are a schematic flowchart of a call processing method applied to a multiparty call establishment scenario according to an embodiment of this application. The multiparty call establishment scenario includes a first terminal device UE-A, a second terminal device UE-B, a third terminal device UE-C, a proxy call session control function P-CSCF1, a serving call session control function S-CSCF1, a proxy call session control function P-CSCF2, a serving call session control function S-CSCF2, a proxy call session control function P-CSCF3, a serving call session control function S-CSCF3, an application server AS, and a unified media function network element UMF. It can be noted that, for ease of description, FIG. 12A and FIG. 12B do not show a complete process of interaction between the UE-B and the proxy call session control function P-CSCF2 as well as the serving call session control function S-CSCF2 (which is the same as the basic call process and is not described herein), and a complete process of interaction between the UE-C and the proxy call session control function P-CSCF3 as well as the serving call session control function S-CSCF3 (which is the same as the basic call process and is not described herein again). In the multiparty call establishment scenario, it is assumed that the UE-A and the UE-B have established a session, and the UE-A holds the UE-B, and then initiates a multiparty call. A multiparty call establishment process shown in FIG. 12A and FIG. 12B includes the following steps.
1: The UE-A sends an INVITE message, where a request-uri is a conference factory uri, and the uri indicates the AS to create a conference.
2: The P-CSCF1 receives the INVITE message, and indicates the UMF to create a media endpoint endpoint1, where for a processing process, refer to the description of creating the media endpoint in the basic call process.
3: The P-CSCF1 sends the INVITE message to the AS, where a local-media header field is added to the message and the local-media header field carries a URL of the endpoint1.
4: The AS receives the INVITE message, where the request-uri is the conference factory uri and a service type is recorded as a conference calling (a multiparty call), and sends a 200 (INVITE) response message to a calling side, where the 200 (INVITE) response message carries SDP information of the endpoint1.
5: The P-CSCF1 sends the 200 (INVITE) response message to the UE-A, where the response message does not include the local-media header field (the local-media header field is transferred in only an IMS domain) and carries the SDP information of the endpoint1. Through the process, the UE-A participates in the multiparty call.
6 and 7: The UE-A sends a REFER message, where a refer-to header field is B, and the REFER message carries a replace parameter (the parameter indicates the AS to replace the original session between the UE-A and the UE-B with the newly created multiparty call), and indicates the AS to add the UE-B to the multiparty call.
8 and 9: After receiving the REFER message, the AS sends a 202 (REFER) response message to the P-CSCF 1, where the response message indicates that a REFER request is accepted.
10 and 11: There is an implicit subscription in the REFER, where the implicit subscription is used for subscribing to a progress status of the REFER request, that is, a progress status in which the AS adds the UE-B to the multiparty call. For example, the AS sends a NOTIFY message to the P-CSCF1, where content of a message body carries SIP/2.0 100 Trying and is for notifying that a subscription state of a calling REFER is active, the state indicates that the AS has received and verified the subscription created by the REFER, and the content "SIP/2.0 100 Trying" in the message body indicates that the progress status is 100 Trying, that is, the AS is trying to add the UE-B to the multiparty call.
12 and 13: The AS sends an INVITE message to the UE-B, where a local-media header field is added to the INVITE message and the local-media header field carries a Context URL corresponding to the endpoint1 rather than the URL of the endpoint1. The purpose is to prevent the P-CSCF2 from creating an association relationship with the endpoint1. In a multiparty call scenario, an association relationship between media endpoints needs to be created by the AS.
14: The P-CSCF2 corresponding to the UE-B receives the INVITE message, and indicates the UMF to create a second media endpoint endpoint2.
15 and 16: The UE-B sends a 200 (INVITE) response message to the S-CSCF1, where the response message carries media information of the UE-B, including an IP address, a port number, codec information, and the like of the UE-B. After receiving the 200 (INVITE) response message, the P-CSCF1 fills remote media information of the endpoint2 as the media information of the UE-B, adds a local-media header field, and includes a URL of the endpoint2 in the local-media header field.
17: The AS receives the 200 (INVITE) response, sends an association indication message to the UMF, and indicates the UMF to create an association relationship between all media endpoints in the multiparty call (currently, only the UE-A participates in the multiparty call, and therefore, the media endpoint in the multiparty call is only the endpoint1) and the endpoint2.
18 and 19: The AS sends an ACK message to the P-CSCF1, where the ACK message carries media information of the endpoint2, including an IP address, a port number, codec information, and the like of the endpoint2. It can be noted that, after receiving the ACK message, the P-CSCF 1 does not create an association relationship between the endpoint1 and the endpoint2.
20: The AS indicates the UMF to stop playing a call hold tone to the UE-B.
21 and 22: The AS sends a NOTIFY message to the P-CSCF1, to notify the P-CSCF1 that the subscription status of the calling REFER is terminated. The message body carries an SIP status code: SIP/2.0 200 OK, indicating that the implicit subscription associated with the REFER is terminated (that is, the AS does not send the NOTIFY message subsequently). The SIP status code "SIP/2.0 200 OK" indicates that the AS has successfully added the UE-B to the multiparty call.
23: The AS sends a BYE message to the S-CSCF1 to release the original session between the UE-A and the UE-B.
24: After receiving the BYE message, the P-CSCF1 of the UE-A indicates the UMF to release media endpoints applied for the original session between the UE-A and the UE-B.
25: The P-CSCF1 sends the BYE message to the UE-A.
26 and 27: The AS sends a BYE message to the UE-B to release the original session between the UE-A and the UE-B.
28: After receiving the BYE message, the P-CSCF2 of the UE-B indicates the UMF to release media endpoints applied for the original session between the UE-A and the UE-B and delete the media association relationship.

It can be noted that a subsequent process further includes a step in which the UE-A adds a new user UE-C to the multiparty call. A specific implementation is similar to the process in which the UE-A adds the UE-B to the multiparty call. A difference is as follows.
(1) The refer-to header field in the REFER message sent by the UE-A is a number of C and does not carry the replace parameter.
(2) The INVITE message sent by the AS to the UE-C does not carry the replace header field.
(3) A session is established between the UE-A and the UE-C, and the BYE message does not need to be sent to the UE-A and the UE-C to release the original session.

It is assumed that a media endpoint corresponding to the UE-C on the UMF is an endpoint3. When the AS receives a 200 (INVITE) response message from the UE-C, the UMF needs to simultaneously create an association relationship between the endpoint1 and the endpoint3 and between the endpoint2 and the endpoint3 because the endpoint1 and the endpoint2 already exist in the conference.

To implement the functions in the methods provided in embodiments of this application, the unified media processing network element, the application server, and the access media control network element may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

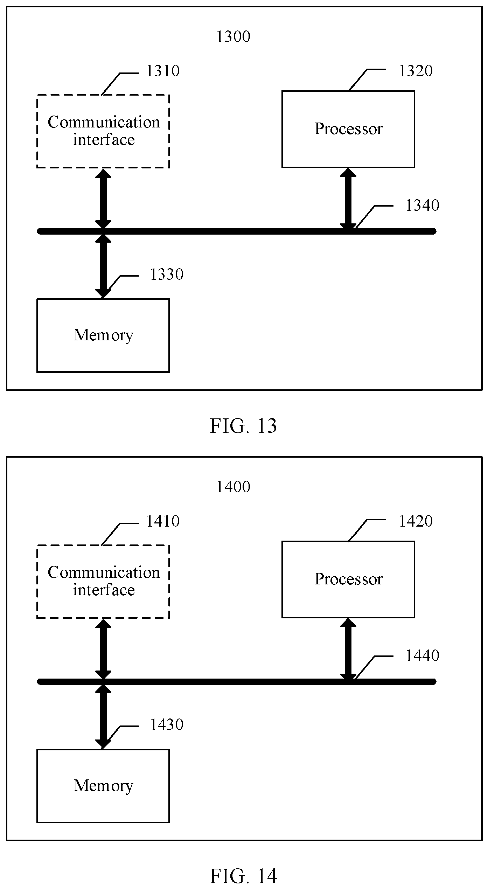

FIG. 13 is a call processing apparatus 1300 according to an embodiment of this application. The call processing apparatus 1300 is configured to implement the function of the unified media function network element in the foregoing method embodiments. The apparatus may be a device, an apparatus in a device, or an apparatus that can be used together with a device. The apparatus may be a chip system. In this embodiment of this application, the chip system may include a chip, or may include a chip and another discrete component. The call processing apparatus 1300 includes at least one processor 1320, configured to implement the function of the unified media function network element in the call processing methods provided in embodiments of this application. For example, the processor 1320 may forward media data of any one of terminal devices participating in a multiparty call to one or more terminal devices other than the any terminal device in the terminal devices participating in the multiparty call, and perform other operations. For details, refer to the detailed description in the method example. Details are not described herein again.

The apparatus 1300 may further include at least one memory 1330, configured to store program instructions and/or data. The memory 1330 is coupled to the processor 1320. The coupling in this embodiment of this application may be an indirect coupling or a communication connection between apparatuses, units, or modules in an electrical form, a mechanical form, or another form, and is used for information exchange between the apparatuses, the units, or the modules. The processor 1320 may operate in collaboration with the memory 1330. The processor 1320 may execute the program instructions stored in the memory 1330. At least one of the at least one memory may be included in the processor.

The apparatus 1300 may further include a communication interface 1310. The communication interface may be, for example, a transceiver, an interface, a bus, a circuit, or an apparatus that can implement receiving and sending functions. The communication interface 1310 is configured to communicate with another device through a transmission medium, so that an apparatus in the apparatus 1300 may communicate with the another device. The processor 1320 receives and sends data through the communication interface 1310, and is configured to implement the methods performed by the unified media function network element in embodiments corresponding to FIG. 8 to FIG. 12A and FIG. 12B. For details, refer to the detailed descriptions in the method examples. Details are not described herein again.

This embodiment of this application does not limit a specific connection medium between the communication interface 1310, the processor 1320, and the memory 1330. In this embodiment of this application, in FIG. 13, the memory 1330, the processor 1320, and the communication interface 1310 are connected through a bus 1340, and the bus is represented using a bold line in FIG. 13. A connection manner between other components is merely an example for description, and imposes no limitation. The bus may be classified into an address bus, a data bus, a control bus, and the like. For ease of representation, only one bold line represents the bus in FIG. 13, but this does not mean that there is only one bus or only one type of bus.

FIG. 14 is another call processing apparatus 1400 according to an embodiment of this application. The call processing apparatus 1400 is configured to implement the function of the application server in the foregoing method embodiments. The apparatus may be a device, an apparatus in a device, or an apparatus that can be used together with a device. The apparatus may be a chip system. The call processing apparatus 1400 includes at least one processor 1420, configured to implement the function of the application server in the methods provided in embodiments of this application. For example, the processor 1420 may send a multiparty call connection request message to the unified media function network element. For details, refer to the detailed description in the method example. Details are not described herein again.

The apparatus 1400 may further include at least one memory 1430, configured to store program instructions and/or data. The memory 1430 is coupled to the processor 1420. The coupling in this embodiment of this application may be an indirect coupling or a communication connection between apparatuses, units, or modules in an electrical form, a mechanical form, or another form, and is used for information exchange between the apparatuses, the units, or the modules. The processor 1420 may operate in collaboration with the memory 1430. The processor 1420 may execute the program instructions stored in the memory 1430. At least one of the at least one memory may be included in the processor.

The apparatus 1400 may further include a communication interface 1410. The communication interface may be, for example, a transceiver, an interface, a bus, a circuit, or an apparatus that can implement receiving and sending functions. The communication interface 1410 is configured to communicate with another device through a transmission medium, so that an apparatus in the apparatus 1400 may communicate with the another device. The processor 1420 receives and sends data through the communication interface 1410, and is configured to implement the methods performed by the application server in embodiments corresponding to FIG. 8 to FIG. 12A and FIG. 12B.

This embodiment of this application does not limit a specific connection medium between the communication interface 1410, the processor 1420, and the memory 1430. In this embodiment of this application, in FIG. 14, the memory 1430, the processor 1420, and the communication interface 1410 are connected through a bus 1440, and the bus is represented using a bold line in FIG. 14. A connection manner between other components is merely an example for description, and imposes no limitation. The bus may be classified into an address bus, a data bus, a control bus, and the like. For ease of representation, only one bold line represents the bus in FIG. 14, but this does not mean that there is only one bus or only one type of bus.

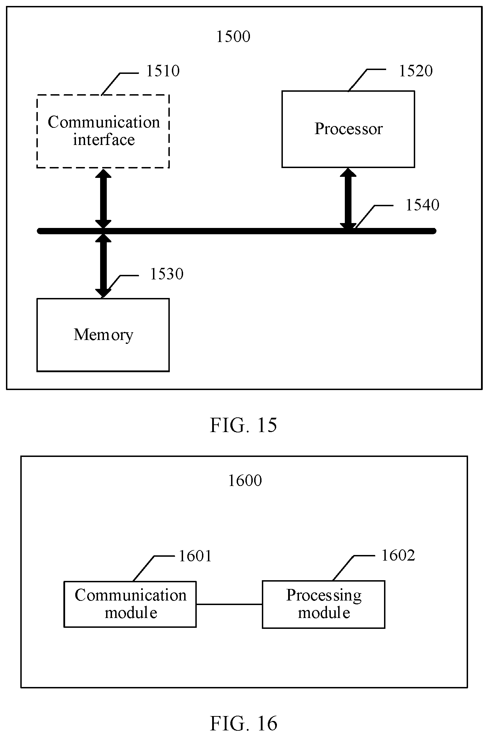

FIG. 15 is another call processing apparatus 1500 according to an embodiment of this application. The call processing apparatus 1500 is configured to implement the function of the first access media control network element/the second access media control network element in the foregoing method embodiments. The apparatus may be a device, an apparatus in a device, or an apparatus that can be used together with a device. The apparatus may be a chip system. The call processing apparatus 1500 includes at least one processor 1520, configured to implement the function of the first access media control network element/the second access media control network element in the methods provided in embodiments of this application. For example, the processor 1520 may send a first media connection request message to the unified media function network element. For details, refer to the detailed description in the method example. Details are not described herein again.

The apparatus 1500 may further include at least one memory 1530, configured to store program instructions and/or data. The memory 1530 is coupled to the processor 1520. The coupling in this embodiment of this application may be an indirect coupling or a communication connection between apparatuses, units, or modules in an electrical form, a mechanical form, or another form, and is used for information exchange between the apparatuses, the units, or the modules. The processor 1520 may operate in collaboration with the memory 1530. The processor 1520 may execute the program instructions stored in the memory 1530. At least one of the at least one memory may be included in the processor.

The apparatus 1500 may further include a communication interface 1510. The communication interface may be, for example, a transceiver, an interface, a bus, a circuit, or an apparatus that can implement receiving and sending functions. The communication interface 1510 is configured to communicate with another device through a transmission medium, so that an apparatus in the apparatus 1500 may communicate with the another device. The processor 1520 receives and sends data through the communication interface 1510, and is configured to implement the methods performed by the first access media control network element/the second access media control network element in embodiments corresponding to FIG. 8 to FIG. 12A and FIG. 12B.

This embodiment of this application does not limit a specific connection medium between the communication interface 1510, the processor 1520, and the memory 1530. In this embodiment of this application, in FIG. 15, the memory 1530, the processor 1520, and the communication interface 1510 are connected through a bus 1540, and the bus is represented using a bold line in FIG. 15. A connection manner between other components is merely an example for description, and imposes no limitation. The bus may be classified into an address bus, a data bus, a control bus, and the like. For ease of representation, only one bold line represents the bus in FIG. 15, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, an HDD or an SSD, or may be a volatile memory, for example, a RAM. The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

FIG. 16 is another call processing apparatus 1600 according to an embodiment of this application. The call processing apparatus may be a unified media processing network element, or an apparatus in a unified media processing network element, or an apparatus that can be used together with a unified media processing network element. In a design, the call processing apparatus may include modules that are in one-to-one correspondence with the methods/operations/steps/actions described in the examples corresponding to FIG. 8 to FIG. 12A and FIG. 12B. The modules may be implemented by a hardware circuit, software, or a combination of a hardware circuit and software. In a design, the apparatus may include a communication module 1601 and a processing module 1602. For example, the communication module 1601 is configured to receive association indication information from an application server. The processing module 1602 is further configured to associate, based on the association indication information, a media endpoint of any one of the terminal devices participating in the multiparty call with respective media endpoints of one or more terminal devices other than the any terminal device in the terminal devices participating in the multiparty call. For details, refer to the detailed descriptions in the examples in FIG. 8 to FIG. 12A and FIG. 12B. Details are not described herein again.

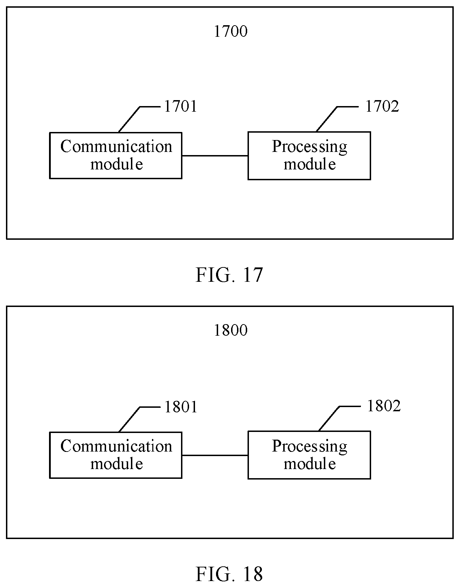

FIG. 17 is another call processing apparatus 1700 according to an embodiment of this application. The call processing apparatus may be an application server, an apparatus in an application server, or an apparatus that can be used together with an application server. In a design, the call processing apparatus may include modules that are in one-to-one correspondence with the methods/operations/steps/actions described in the examples corresponding to FIG. 8 to FIG. 12A and FIG. 12B. The modules may be implemented by a hardware circuit, software, or a combination of a hardware circuit and software. In a design, the apparatus may include a communication module 1701 and a processing module 1702. For example, the communication module 1701 is configured to receive a first session request message. The processing module 1702 is configured to indicate the unified media function network element to create a selective forwarding unit for the terminal devices participating in the multiparty call. For details, refer to the detailed descriptions in the examples in FIG. 8 to FIG. 12A and FIG. 12B. Details are not described herein again.

FIG. 18 is another call processing apparatus 1800 according to an embodiment of this application. The call processing apparatus may be a first access media control network element/a second access media control network element, or an apparatus in a first access media control network element/a second access media control network element, or an apparatus that can be used together with a first access media control network element/a second access media control network element. In a design, the call processing apparatus may include modules that are in one-to-one correspondence with the methods/operations/steps/actions described in the examples corresponding to FIG. 8 to FIG. 12A and FIG. 12B. The modules may be implemented by a hardware circuit, software, or a combination of a hardware circuit and software. In a design, the apparatus may include a communication module 1801 and a processing module 1802. For example, the communication module 1801 is configured to send a first session request message to an application server. The processing module 1802 is configured to indicate the unified media function network element to create a first media endpoint/a second media endpoint. For details, refer to the detailed descriptions in the examples in FIG. 8 to FIG. 12A and FIG. 12B. Details are not described herein again.

All or a part of the technical solutions provided in embodiments of this application may be implemented by using software, hardware, firmware, or any combination thereof. When software is used for implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

## Claims

1. A call processing method performed by a unified media function, UMF, network element in an IP multimedia subsystem, IMS-based network architecture, comprising:
receiving (801, 1106) a multiparty call connection request message from an application server, AS, wherein the multiparty call connection request message comprises identifiers or an identifier list of terminal devices that request to participate in a multiparty call;
receiving (802) respective media data from the terminal devices participating in the multiparty call, wherein the terminal devices participating in the multiparty call include at least three terminal devices; and
forwarding (803) media data of any one of the terminal devices participating in the multiparty call to one or more terminal devices other than the any terminal device in the terminal devices participating in the multiparty call.

2. The method according to claim 1, wherein the method further comprises:
creating (1103, 1112, 1121) based on the multiparty call connection request message, respective media endpoints for the terminal devices participating in the multiparty call, wherein the media endpoints are logical entities configured to send and receive media data; and
receiving (1115, 1124) association indication information from the AS, and associating, based on the association indication information, a media endpoint of any one of the terminal devices participating in the multiparty call with respective media endpoints of one or more terminal devices other than the any terminal device in the terminal devices participating in the multiparty call.

3. The method according to claim 2, wherein the forwarding media data of any one of the terminal devices participating in the multiparty call to one or more terminal devices other than the any terminal device in the terminal devices participating in the multiparty call comprises:
performing multi-stream forwarding through an association between the media endpoint of the any one of the terminal devices participating in the multiparty call and the respective media endpoints of the one or more terminal devices other than the any terminal device in the terminal devices participating in the multiparty call.

4. The method according to any one of claims 1 to 3, wherein the method further comprises:
sending (1122) respective resource identifiers of the terminal devices participating in the multiparty call to the AS, wherein the resource identifiers are uniform resource locators, URLs.

5. The method according to any one of claims 1 to 4, wherein after the receiving, by a UMF network element, a multiparty call connection request message from an AS, the method further comprises:
creating based on the multiparty call connection request message, a selective forwarding unit for the terminal devices participating in the multiparty call, wherein the selective forwarding unit is configured to perform multi-stream forwarding.

6. The method according to claim 5, wherein the forwarding media data of any one of the terminal devices participating in the multiparty call to one or more terminal devices other than the any terminal device in the terminal devices participating in the multiparty call comprises:
associating the selective forwarding unit with the respective media endpoints of the terminal devices participating in the multiparty call; and
performing multi-stream forwarding through an association between a media endpoint of any one of the terminal devices participating in the multiparty call and the selective forwarding unit, and an association between the selective forwarding unit and respective media endpoints of one or more terminal devices other than the any terminal device in the terminal devices participating in the multiparty call.

7. A call processing method performed by an application server, AS, in an IP multimedia subsystem, IMS-based network architecture, comprising:
receiving (1105) a first session request message, wherein the first session request message indicates the AS to create a multiparty call; and
sending (1106) a multiparty call connection request message to a unified media function, UMF network element, wherein the multiparty call connection request message comprises identifiers or an identifier list of terminal devices participating in the multiparty call,
wherein the multiparty call connection request message is used for requesting the UMF network element to forward media data of any one of the terminal devices participating in the multiparty call to one or more terminal devices other than the any terminal device in the terminal devices participating in the multiparty call.

8. The method according to claim 7, wherein the method further comprises:
sending (1115) association indication information to the UMF network element, wherein the association indication information indicates the UMF network element to associate a media endpoint of any one of the terminal devices participating in the multiparty call with respective media endpoints of one or more terminal devices other than the any terminal device in the terminal devices participating in the multiparty call.

9. The method according to claim 7 or 8, wherein the multiparty call connection request message further indicates the UMF network element to create a selective forwarding unit for the terminal devices participating in the multiparty call, the selective forwarding unit is associated with respective media endpoints of the terminal devices participating in the multiparty call, and an association relationship between the selective forwarding unit and the respective media endpoints of the terminal devices participating in the multiparty call is used for multi-stream forwarding.

10. The method according to any one of claims 7 to 9, wherein the method further comprises:
receiving (1104, 1113) resource identifiers of the terminal devices participating in the multiparty call from the UMF network element, wherein the resource identifiers are uniform resource locators, URLs.

11. A call processing apparatus, configured to implement the method according to any one of claims 1 to 10.

12. A computer-readable storage medium, comprising instructions, wherein when the instructions are run on a computer, the computer is enabled to perform the method according to any one of claims 1 to 10.

13. An IP multimedia subsystem, IMS-based call processing system, comprising:
a first access media control network element, is configured to: send a first session request message to an application server, wherein the first session request message indicates the application server to create a multiparty call;
a unified media function network element, is configured to: receive a multiparty call connection request message from the application server, wherein the multiparty call connection request message comprises identifiers or an identifier list of terminal devices participating in the multiparty call;
the first access media control network element, is further configured to receive a first session response message from the application server, wherein the first session response message comprises a resource identifier of a first terminal device and a resource identifier of the multiparty call, and the first terminal device initiates the multiparty call;
a second access media control network element, is configured to: send a second session request message to the application server, wherein the second session request message indicates the application server to add one or more terminal devices other than the first terminal device in the terminal devices participating in the multiparty call to the multiparty call; and receive a second session response message from the application server, wherein the second session response message comprises media information of a second terminal device and a resource identifier of a second media endpoint, the second terminal device participates in the multiparty call, and the second media endpoint is created by the unified media function network element for the second terminal device; and
the unified media function network element is configured to: receive respective media data from the terminal devices participating in the multiparty call, wherein the terminal devices participating in the multiparty call include at least three terminal devices; and forward media data of any one of the terminal devices participating in the multiparty call to one or more terminal devices other than the any terminal device in the terminal devices participating in the multiparty call.

14. The system according to claim 13, wherein
the unified media function network element, is further configured to: create, based on the multiparty call connection request message, respective media endpoints for the terminal devices participating in the multiparty call; receive association indication information from the application server; and associate, based on the association indication information, a media endpoint of any one of the terminal devices participating in the multiparty call with respective media endpoints of one or more terminal devices other than the any terminal device in the terminal devices participating in the multiparty call.

15. The system according to claim 13, wherein
the second access media control network element, is further configured to: send a media update indication message to the unified media function network element, wherein the media update indication message indicates the unified media function network element to update remote media information of the second media endpoint to the media information of the second terminal device.

## Patentansprüche

1. Anrufverarbeitungsverfahren, das durch ein Unified-Media-Function-Netzelement, UMF-Netzelement, in einer IPmultimediateilsystembasierten, IMS-basierten, Netzarchitektur durchgeführt wird, umfassend:
Empfangen (801, 1106) einer Mehrparteienanrufverbindungsanforderungsnachricht von einem Anwendungsserver, AS, wobei die Mehrparteienanrufverbindungsanforderungsnachricht Kennungen oder eine Kennungsliste von Endgeräteeinrichtungen umfasst, die anfordern, an einem Mehrparteienanruf teilzunehmen;
Empfangen (802) jeweiliger Mediendaten von den Endgeräteeinrichtungen, die an dem Mehrparteienanruf teilnehmen, wobei die Endgeräteeinrichtungen, die an dem Mehrparteienanruf teilnehmen, mindestens drei Endgeräteeinrichtungen beinhalten; und
Weiterleiten (803) von Mediendaten einer beliebigen der Endgeräteeinrichtungen, die an dem Mehrparteienanruf teilnehmen, an eine oder mehrere andere Endgeräteeinrichtungen als die beliebige Endgeräteeinrichtung in den Endgeräteeinrichtungen, die an dem Mehrparteienanruf teilnehmen.

2. Verfahren nach Anspruch 1, wobei das Verfahren ferner Folgendes umfasst:
Erstellen (1103, 1112, 1121), basierend auf der Mehrparteienanrufverbindungsanforderungsnachricht, jeweiliger Medienendpunkte für die Endgeräteeinrichtungen, die an dem Mehrparteienanruf teilnehmen, wobei die Medienendpunkte logische Entitäten sind, die dazu konfiguriert sind, Mediendaten zu senden und zu empfangen; und
Empfangen (1115, 1124) von Zuordnungsangabeinformationen von dem AS und Zuordnen, basierend auf den Zuordnungsangabeinformationen, eines Medienendpunkts einer beliebigen der Endgeräteeinrichtungen, die an dem Mehrparteienanruf teilnehmen, zu jeweiligen Medienendpunkten einer oder mehrerer anderer Endgeräteeinrichtungen als der beliebigen Endgeräteeinrichtung in den Endgeräteeinrichtungen, die an dem Mehrparteienanruf teilnehmen.

3. Verfahren nach Anspruch 2, wobei das Weiterleiten von Mediendaten einer beliebigen der Endgeräteeinrichtungen, die an dem Mehrparteienanruf teilnehmen, an eine oder mehrere andere Endgeräteeinrichtungen als die beliebige Endgeräteeinrichtung in den Endgeräteeinrichtungen, die an dem Mehrparteienanruf teilnehmen, Folgendes umfasst:
Durchführen einer Mehrstromweiterleitung über eine Zuordnung zwischen dem Medienendpunkt der beliebigen der Endgeräteeinrichtungen, die an dem Mehrparteienanruf teilnehmen, und den jeweiligen Medienendpunkten der einen oder der mehreren anderen Endgeräteeinrichtungen als der beliebigen Endgeräteeinrichtung in den Endgeräteeinrichtungen, die an dem Mehrparteienanruf teilnehmen.

4. Verfahren nach einem der Ansprüche 1 bis 3, wobei das Verfahren ferner Folgendes umfasst:
Senden (1122) jeweiliger Ressourcenkennungen der Endgeräteeinrichtungen, die an dem Mehrparteienanruf teilnehmen, an den AS, wobei die Ressourcenkennungen Uniform Resource Locators, URLs, sind.

5. Verfahren nach einem der Ansprüche 1 bis 4, wobei das Verfahren nach dem Empfangen, durch ein UMF-Netzelement, einer Mehrparteienanrufverbindungsanforderungsnachricht von einem AS ferner Folgendes umfasst:
Erstellen, basierend auf der Mehrparteienanrufverbindungsanforderungsnachricht, einer selektiven Weiterleitungseinheit für die Endgeräteeinrichtungen, die an dem Mehrparteienanruf teilnehmen, wobei die selektive Weiterleitungseinheit dazu konfiguriert ist, die Mehrstromweiterleitung durchzuführen.

6. Verfahren nach Anspruch 5, wobei das Weiterleiten von Mediendaten einer beliebigen der Endgeräteeinrichtungen, die an dem Mehrparteienanruf teilnehmen, an eine oder mehrere andere Endgeräteeinrichtungen als die beliebige Endgeräteeinrichtung in den Endgeräteeinrichtungen, die an dem Mehrparteienanruf teilnehmen, Folgendes umfasst:
Zuordnen der selektiven Weiterleitungseinheit zu den jeweiligen Medienendpunkten der Endgeräteeinrichtungen, die an dem Mehrparteienanruf teilnehmen; und
Durchführen der Mehrstromweiterleitung über eine Zuordnung zwischen einem Medienendpunkt einer beliebigen der Endgeräteeinrichtungen, die an dem Mehrparteienanruf teilnehmen, und der selektiven Weiterleitungseinheit und einer Zuordnung zwischen der selektiven Weiterleitungseinheit und jeweiligen Medienendpunkten einer oder mehrerer anderer Endgeräteeinrichtungen als der beliebigen Endgeräteeinrichtung in den Endgeräteeinrichtungen, die an dem Mehrparteienanruf teilnehmen.

7. Anrufverarbeitungsverfahren, das durch einen Anwendungsserver, AS, in einer IPmultimediateilsystembasierten, IMS-basierten, Netzarchitektur durchgeführt wird, umfassend:
Empfangen (1105) einer ersten Sitzungsanforderungsnachricht, wobei die erste Sitzungsanforderungsnachricht dem AS angibt, einen Mehrparteienanruf zu erstellen; und
Senden (1106) einer Mehrparteienanrufverbindungsanforderungsnachricht an ein Unified-Media-Function-Netzelement, UMF-Netzelement, wobei die Mehrparteienanrufverbindungsanforderungsnachricht Kennungen oder eine Kennungsliste von Endgeräteeinrichtungen umfasst, die an dem Mehrparteienanruf teilnehmen,
wobei die Mehrparteienanrufverbindungsanforderungsnachricht dazu verwendet wird, das UMF-Netzelement aufzufordern, Mediendaten einer beliebigen der Endgeräteeinrichtungen, die an dem Mehrparteienanruf teilnehmen, an eine oder mehrere andere Endgeräteeinrichtungen als die beliebige Endgeräteeinrichtung in den Endgeräteeinrichtungen, die an dem Mehrparteienanruf teilnehmen, weiterzuleiten.

8. Verfahren nach Anspruch 7, wobei das Verfahren ferner Folgendes umfasst:
Senden (1115) von Zuordnungsangabeinformationen an das UMF-Netzelement, wobei die Zuordnungsangabeinformationen dem UMF-Netzelement angeben, einen Medienendpunkt einer beliebigen der Endgeräteeinrichtungen, die an dem Mehrparteienanruf teilnehmen, jeweiligen Medienendpunkten einer oder mehrerer anderer Endgeräteeinrichtungen als der beliebigen Endgeräteeinrichtung in den Endgeräteeinrichtungen, die an dem Mehrparteienanruf teilnehmen, zuzuordnen.

9. Verfahren nach Anspruch 7 oder 8, wobei die Mehrparteienanrufverbindungsanforderungsnachricht ferner dem UMF-Netzelement angibt, eine selektive Weiterleitungseinheit für die Endgeräteeinrichtungen, die an dem Mehrparteienanruf teilnehmen, zu erstellen, die selektive Weiterleitungseinheit jeweiligen Medienendpunkten der Endgeräteeinrichtungen, die an dem Mehrparteienanruf teilnehmen, zugeordnet wird und eine Zuordnungsbeziehung zwischen der selektiven Weiterleitungseinheit und den jeweiligen Medienendpunkten der Endgeräteeinrichtungen, die an dem Mehrparteienanruf teilnehmen, für eine Mehrstromweiterleitung verwendet wird.

10. Verfahren nach einem der Ansprüche 7 bis 9, wobei das Verfahren ferner Folgendes umfasst:
Empfangen (1104, 1113) von Ressourcenkennungen der Endgeräteeinrichtungen, die an dem Mehrparteienanruf teilnehmen, von dem UMF-Netzelement, wobei die Ressourcenkennungen Uniform Resource Locators, URLs, sind.

11. Anrufverarbeitungsvorrichtung, die dazu konfiguriert ist, das Verfahren nach einem der Ansprüche 1 bis 10 umzusetzen.

12. Computerlesbares Speichermedium, umfassend Anweisungen, wobei, wenn die Anweisungen auf einem Computer ausgeführt werden, es dem Computer ermöglicht wird, das Verfahren nach einem der Ansprüche 1 bis 10 durchzuführen.

13. IP-multimediateilsystembasiertes, IMS-basiertes, Anrufverarbeitungssystem, umfassend:
ein erstes Zugriffsmediensteuerungsnetzelement, das zu Folgendem konfiguriert ist: Senden einer ersten Sitzungsanforderungsnachricht an einen Anwendungsserver, wobei die erste Sitzungsanforderungsnachricht dem Anwendungsserver angibt, einen Mehrparteienanruf zu erstellen;
ein Unified-Media-Function-Netzelement, das zu Folgendem konfiguriert ist: Empfangen einer Mehrparteienanrufverbindungsanforderungsnachricht von dem Anwendungsserver, wobei die Mehrparteienanrufverbindungsanforderungsnachricht Kennungen oder eine Kennungsliste von Endgeräteeinrichtungen umfasst, die an dem Mehrparteienanruf teilnehmen;
wobei das erste Zugriffsmediensteuerungsnetzelement ferner dazu konfiguriert ist, eine erste Sitzungsantwortnachricht von dem Anwendungsserver zu empfangen, wobei die erste Sitzungsantwortnachricht eine Ressourcenkennung einer ersten Endgeräteeinrichtung und eine Ressourcenkennung des Mehrparteienanrufs umfasst und die erste Endgeräteeinrichtung den Mehrparteienanruf initiiert;
ein zweites Zugriffsmediensteuerungsnetzelement, das zu Folgendem konfiguriert ist: Senden einer zweiten Sitzungsanforderungsnachricht an den Anwendungsserver, wobei die zweite Sitzungsanforderungsnachricht dem Anwendungsserver angibt, eine oder mehrere andere Endgeräteeinrichtungen als die erste Endgeräteeinrichtung in den Endgeräteeinrichtungen, die an dem Mehrparteienanruf teilnehmen, zu dem Mehrparteienanruf hinzuzufügen; und Empfangen einer zweiten Sitzungsantwortnachricht von dem Anwendungsserver, wobei die zweite Sitzungsantwortnachricht Medieninformationen einer zweiten Endgeräteeinrichtung und eine Ressourcenkennung eines zweiten Medienendpunkts umfasst, die zweite Endgeräteeinrichtung an dem Mehrparteienanruf teilnimmt und der zweite Medienendpunkt durch das Unified-Media-Function-Netzelement für die zweite Endgeräteeinrichtung erstellt wird; und
wobei das Unified-Media-Function-Netzelement zu Folgendem konfiguriert ist: Empfangen jeweiliger Mediendaten von den Endgeräteeinrichtungen, die an dem Mehrparteienanruf teilnehmen, wobei die Endgeräteeinrichtungen, die an dem Mehrparteienanruf teilnehmen, mindestens drei Endgeräteeinrichtungen beinhalten; und Weiterleiten von Mediendaten einer beliebigen der Endgeräteeinrichtungen, die an dem Mehrparteienanruf teilnehmen, an eine oder mehrere andere Endgeräteeinrichtungen als die beliebige Endgeräteeinrichtung in den Endgeräteeinrichtungen, die an dem Mehrparteienanruf teilnehmen.

14. System nach Anspruch 13, wobei
das Unified-Media-Function-Netzelement ferner zu Folgendem konfiguriert ist: Erstellen, basierend auf der Mehrparteienanrufverbindungsanforderungsnachricht, jeweiliger Medienendpunkte für die Endgeräteeinrichtungen, die an dem Mehrparteienanruf teilnehmen; Empfangen von Zuordnungsangabeinformationen von dem Anwendungsserver; und
Zuordnen, basierend auf den Zuordnungsangabeinformationen, eines Medienendpunkts einer beliebigen der Endgeräteeinrichtungen, die an dem Mehrparteienanruf teilnehmen, zu jeweiligen Medienendpunkten einer oder mehrerer anderer Endgeräteeinrichtungen als der beliebigen Endgeräteeinrichtung in den Endgeräteeinrichtungen, die an dem Mehrparteienanruf teilnehmen.

15. System nach Anspruch 13, wobei
das zweite Zugriffsmediensteuerungsnetzelement ferner zu Folgendem konfiguriert ist: Senden einer Medienaktualisierungsangabenachricht an das Unified-Media-Function-Netzelement, wobei die Medienaktualisierungsangabenachricht dem Unified-Media-Function-Netzelement angibt, entfernte Medieninformationen des zweiten Medienendpunkts auf die Medieninformationen der zweiten Endgeräteeinrichtung zu aktualisieren.

## Revendications

1. Procédé de traitement d'appel réalisé par un élément de réseau de fonction multimédia unifiée, UMF, dans une architecture de réseau basée sur IMS de sous-système multimédia IP, comprenant :
la réception (801, 1106) d'un message de demande de connexion d'appel multipartite à partir d'un serveur d'applications, AS, dans lequel le message de demande de connexion d'appel multipartite comprend des identifiants ou une liste d'identifiants de dispositifs terminaux qui demandent à participer à un appel multipartite ;
la réception (802) de données multimédia respectives à partir des dispositifs terminaux participant à l'appel multipartite, dans lequel les dispositifs terminaux participant à l'appel multipartite comportent au moins trois dispositifs terminaux ; et
le transfert (803) de données multimédia de l'un quelconque des dispositifs terminaux participant à l'appel multipartite vers un ou plusieurs dispositifs terminaux autres que le quelconque dispositif terminal dans les dispositifs terminaux participant à l'appel multipartite.

2. Procédé selon la revendication 1, dans lequel le procédé comprend également :
la création (1103, 1112, 1121) sur la base du message de demande de connexion d'appel multipartite, de points d'extrémité multimédia respectifs pour les dispositifs terminaux participant à l'appel multipartite, dans lequel les points d'extrémité multimédia sont des entités logiques configurées pour envoyer et recevoir des données multimédia ; et
la réception (1115, 1124) d'informations d'indication d'association à partir de l'AS, et l'association, sur la base des informations d'indication d'association, d'un point d'extrémité multimédia de l'un quelconque des dispositifs terminaux participant à l'appel multipartite avec les points d'extrémité multimédia respectifs d'un ou de plusieurs dispositifs terminaux autres que le quelconque dispositif terminal des dispositifs terminaux participant à l'appel multipartite.

3. Procédé selon la revendication 2, dans lequel le transfert de données multimédia de l'un quelconque des dispositifs terminaux participant à l'appel multipartite vers un ou plusieurs dispositifs terminaux autres que le quelconque dispositif terminal dans les dispositifs terminaux participant à l'appel multipartite comprend :
la réalisation d'un transfert multiflux par le biais d'une association entre le point d'extrémité multimédia de l'un quelconque des dispositifs terminaux participant à l'appel multipartite et les points d'extrémité multimédia respectifs des un ou plusieurs dispositifs terminaux autres que le quelconque dispositif terminal dans les dispositifs terminaux participant à l'appel multipartite.

4. Procédé selon l'une quelconque des revendications 1 à 3, dans lequel le procédé comprend également :
l'envoi (1122) d'identifiants de ressources respectifs des dispositifs terminaux participant à l'appel multipartite à l'AS, dans lequel les identifiants de ressources sont des localisateurs de ressources uniformes, URL.

5. Procédé selon l'une quelconque des revendications 1 à 4, dans lequel après la réception, par un élément de réseau UMF, d'un premier message de demande de connexion d'appel multipartite à partir d'un AS, le procédé comprend également :
la création sur la base du message de demande de connexion d'appel multipartite, d'une unité de transfert sélectif pour les dispositifs terminaux participant à l'appel multipartite, dans lequel l'unité de transfert sélectif est configurée pour réaliser un transfert multiflux.

6. Procédé selon la revendication 5, dans lequel le transfert de données multimédia de l'un quelconque des dispositifs terminaux participant à l'appel multipartite vers un ou plusieurs dispositifs terminaux autres que le quelconque dispositif terminal dans les dispositifs terminaux participant à l'appel multipartite comprend :
l'association de l'unité de transfert sélectif aux points d'extrémité multimédia respectifs des dispositifs terminaux participant à l'appel multipartite ; et
la réalisation d'un transfert multiflux par le biais d'une association entre un point d'extrémité multimédia de l'un quelconque des dispositifs terminaux participant à l'appel multipartite et l'unité de transfert sélectif, et une association entre l'unité de transfert sélectif et les points d'extrémité multimédia respectifs d'un ou de plusieurs dispositifs terminaux autres que le quelconque dispositif terminal dans les dispositifs terminaux participant à l'appel multipartite.

7. Procédé de traitement d'appels réalisé par un serveur d'applications, AS, dans une architecture de réseau basée sur IMS de sous-système multimédia IP, comprenant :
la réception (1105) d'un premier message de demande de session, dans lequel le premier message de demande de session indique à l'AS de créer un appel multipartite ; et
l'envoi (1106) d'un message de demande de connexion d'appel multipartite à un élément de réseau de fonction multimédia unifiée, UMF, dans lequel le message de demande de connexion d'appel multipartite comprend des identifiants ou une liste d'identifiants de dispositifs terminaux participant à l'appel multipartite,
dans lequel le message de demande de connexion d'appel multipartite est utilisé pour demander à l'élément de réseau UMF de transférer les données multimédia de l'un quelconque des dispositifs terminaux participant à l'appel multipartite vers un ou plusieurs dispositifs terminaux autres que le quelconque dispositif terminal dans les dispositifs terminaux participant à l'appel multipartite.

8. Procédé selon la revendication 7, dans lequel le procédé comprend également :
l'envoi (1115) d'informations d'indication d'association à l'élément de réseau UMF, dans lequel les informations d'indication d'association indiquent à l'élément de réseau UMF d'associer un point d'extrémité multimédia de l'un quelconque des dispositifs terminaux participant à l'appel multipartite avec les points d'extrémité multimédia respectifs d'un ou de plusieurs dispositifs terminaux autres que le quelconque dispositif terminal dans les dispositifs terminaux participant à l'appel multipartite.

9. Procédé selon la revendication 7 ou 8, dans lequel le message de demande de connexion d'appel multipartite indique également à l'élément de réseau UMF de créer une unité de transfert sélectif pour les dispositifs terminaux participant à l'appel multipartite, l'unité de transfert sélectif est associée aux points d'extrémité multimédia respectifs des dispositifs terminaux participant à l'appel multipartite, et une relation d'association entre l'unité de transfert sélectif et les points d'extrémité multimédia respectifs des terminaux participant à l'appel multipartite est utilisée pour le transfert multiflux.

10. Procédé selon l'une quelconque des revendications 7 à 9, dans lequel le procédé comprend également :
la réception des identifiants de ressources (1104, 1113) des terminaux participant à l'appel multipartite de l'élément de réseau UMF, dans lequel les identifiants de ressources sont des localisateurs de ressources uniformes, URL.

11. Appareil de communication, configuré pour mettre en œuvre le procédé selon l'une quelconque des revendications 1 à 10.

12. Support de stockage lisible par ordinateur, comprenant des instructions, dans lequel lorsque les instructions sont exécutées sur un ordinateur, l'ordinateur est activé pour réaliser le procédé selon l'une quelconque des revendications 1 à 10.

13. Système de traitement d'appels basé sur IMS de sous-système multimédia IP, comprenant :
un premier élément de réseau de commande multimédia d'accès, est configuré pour : envoyer un premier message de demande de session à un serveur d'applications, dans lequel le premier message de demande de session indique au serveur d'applications de créer un appel multipartite ;
un élément de réseau de fonction multimédia unifié, est configuré pour : recevoir un message de demande de connexion d'appel multipartite à partir du serveur d'applications, dans lequel le message de demande de connexion d'appel multipartite comprend des identifiants ou une liste d'identifiants de dispositifs terminaux participant à l'appel multipartite ;
le premier élément de réseau de commande multimédia d'accès, est également configuré pour recevoir un premier message de réponse de session à partir du serveur d'applications, dans lequel le premier message de réponse de session comprend un identifiant de ressource d'un premier dispositif terminal et un identifiant de ressource de l'appel multipartite, et le premier dispositif terminal initie l'appel multipartite ;
un second élément de réseau de commande d'accès multimédia, est configuré pour : envoyer un second message de demande de session au serveur d'applications, dans lequel le second message de demande de session indique au serveur d'applications d'ajouter un ou plusieurs dispositifs terminaux autres que le premier dispositif terminal dans les dispositifs terminaux participant à l'appel multipartite à l'appel multipartite ; et recevoir un second message de réponse de session à partir du serveur d'applications, dans lequel le second message de réponse de session comprend les informations multimédia d'un second dispositif terminal et un identifiant de ressource d'un second point d'extrémité multimédia, le second dispositif terminal participe à l'appel multipartite, et le second point d'extrémité multimédia est créé par l'élément de réseau de fonction multimédia unifiée pour le second dispositif terminal ; et
l'élément de réseau de fonction multimédia unifiée est configuré pour : recevoir des données multimédia respectives à partir des dispositifs terminaux participant à l'appel multipartite, dans lequel les dispositifs terminaux participant à l'appel multipartite comportent au moins trois dispositifs terminaux ;
et transférer les données multimédia de l'un quelconque des dispositifs terminaux participant à l'appel multipartite à un ou plusieurs dispositifs terminaux autres que le quelconque dispositif terminal dans les dispositifs terminaux participant à l'appel multipartite.

14. Système selon la revendication 13, dans lequel
l'élément de réseau de fonction multimédia unifiée, est également configuré pour : créer, sur la base du message de demande de connexion d'appel multipartite, des points d'extrémité multimédia respectifs pour les dispositifs terminaux participant à l'appel multipartite ; recevoir des informations d'indication d'association à partir du serveur d'applications ;
et associer, sur la base des informations d'indication d'association, un point d'extrémité multimédia de l'un quelconque des dispositifs terminaux participant à l'appel multipartite avec les points d'extrémité multimédia respectifs d'un ou de plusieurs dispositifs terminaux autres que le quelconque dispositif terminal dans les dispositifs terminaux participant à l'appel multipartite.

15. Système selon la revendication 13, dans lequel
le second élément de réseau de commande multimédia d'accès, est également configuré pour : envoyer un message d'indication de mise à jour multimédia à l'élément de réseau de fonction multimédia unifiée, dans lequel le message d'indication de mise à jour multimédia indique à l'élément de réseau de fonction multimédia unifiée de mettre à jour les informations multimédia distantes du second point d'extrémité multimédia avec les informations multimédia du second dispositif terminal.
